# EUROPEAN PATENT APPLICATION

(11) **EP 3 955 678 A1**
(43) Date of publication of application: **16.02.2022**
(21) Application number: 20798841.1
(22) Date of filing: 16.03.2020
(51) Int. Cl.: H04W 72/04

(54) **DATA RECEIVING AND TRANSMITTING METHOD AND APPARATUS**

(30) Priority: 30.04.2019 CN 201910364588; 08.08.2019 CN 201910730909
(71) Applicant: Huawei Technologies Co., Ltd., Shenzhen, Guangdong 518129 (CN)
(72) Inventor: SHI, Hongzhe, Shenzhen, Guangdong 518129 (CN); JI, Liuliu, Shenzhen, Guangdong 518129 (CN); HANG, Haicun, Shenzhen, Guangdong 518129 (CN); REN, Xiang, Shenzhen, Guangdong 518129 (CN); BI, Xiaoyan, Shenzhen, Guangdong 518129 (CN)
(74) Representative: Grünecker Patent- und Rechtsanwälte PartG mbB
(86) International application number: PCT/CN2020/079489
(87) International publication number: WO 2020/220849

(57) **Abstract**

This application provides a data receiving method and apparatus and a data sending method and apparatus. In the method, a terminal device receives a PDCCH and M PDSCHs that are scheduled by using DCI in the PDCCH, where time domain resources occupied by any two of the M PDSCHs do not overlap, and the M PDSCHs are associated with at least two different pieces of beam indication information. Transmit beams and/or receive beams of the M PDSCHs are related to a time interval between adjacent PDSCHs in the M PDSCHs. Because the time interval affects receiving efficiency of the PDSCH, the time interval may be used as a consideration for determining the transmit beam and/or the receive beam of the PDSCH, to optimize the transmit beam and/or the receive beam of the PDSCH. In this way, the receiving efficiency of the PDSCH is improved.

## Description

This application claims priority to Chinese Patent Application No. 201910364588.1, filed with the China National Intellectual Property Administration on April 30, 2019 and entitled "DATA RECEIVING METHOD AND APPARATUS AND DATA SENDING METHOD AND APPARATUS", and to Chinese Patent Application No. 201910730909.5, filed with the China National Intellectual Property Administration on August 8, 2019 and entitled "DATA RECEIVING METHOD AND APPARATUS AND DATA SENDING METHOD AND APPARATUS", which are incorporated herein by reference in their entireties.

### TECHNICAL FIELD

This application relates to the field of communications technologies, and in particular, to a data receiving method and apparatus and a data sending method and apparatus.

### BACKGROUND

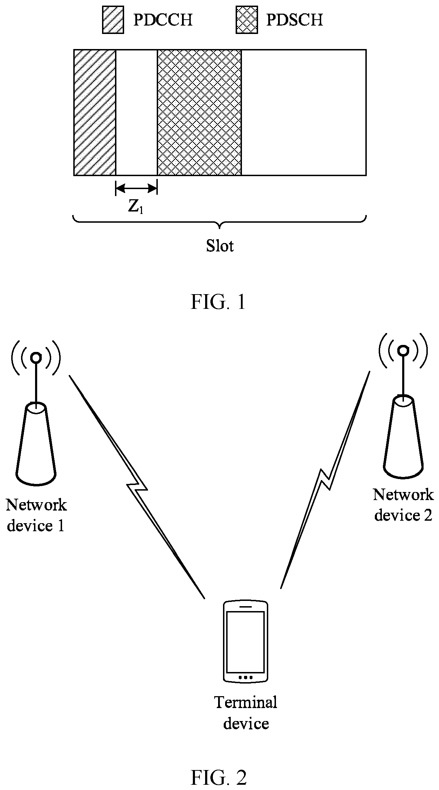

In a long term evolution (long term evolution, LTE for short) system, a network device may schedule only one physical downlink shared channel (physical downlink shared channel, PDSCH for short) in one slot. Refer to FIG. 1. A time interval (that is, Z₁ in FIG. 1) between a time point at which a terminal device completes receiving of a physical downlink control channel (physical downlink control channel, PDCCH for short) and a time point at which the terminal device receives a PDSCH scheduled by using downlink control information (downlink control information, DCI for short) carried on the PDCCH is greater than or equal to a delay threshold, the terminal device receives the PDSCH by using a beam indicated by beam indication information in the DCI. On the contrary, the terminal device receives the PDSCH by using a receive beam of the PDCCH by default.

To improve spectrum utilization, in a new radio (new radio, NR for short) system, a plurality of cells in a network may be deployed in a same frequency band. In this case, when the terminal device is located at a cell edge, communication of the terminal device may be interfered with by a signal sent by a neighboring cell of a serving cell. To resolve this problem, a multipoint transmission technology can be used to effectively avoid interference and improve a user rate. Multipoint refers to a plurality of transmission reception points (transmission reception points, TRPs for short). The plurality of TRPs may perform coordination by exchanging information, to avoid interference. In a multipoint transmission scenario, to improve data transmission reliability of the terminal device, the plurality of TRPs may separately send PDSCHs to the terminal device, and the PDSCHs sent by the plurality of TRPs to the terminal device may be located in a same slot. If the foregoing method is used to determine a receive beam for each of the plurality of PDSCHs sent by the plurality of TRPs to the terminal device, receiving efficiency of the terminal device may be reduced.

### SUMMARY

Embodiments of this application provide a data receiving method and apparatus and a data sending method and apparatus, to improve receiving efficiency of a terminal device.

To achieve the foregoing objective, the embodiments of this application provide the following technical solutions.

According to a first aspect, a data receiving method is provided. The method includes: A terminal device receives a PDCCH and M PDSCHs that are scheduled by using DCI in the PDCCH, where time domain resources occupied by any two of the M PDSCHs do not overlap, the M PDSCHs are associated with at least two different pieces of beam indication information, receive beams of the M PDSCHs are related to a first time interval, the first time interval is a time interval between adjacent PDSCHs in the M PDSCHs, and M is an integer greater than 1. According to the method provided in the first aspect, when a plurality of PDSCHs are scheduled by using one PDCCH, the terminal device may determine the receive beams of the M PDSCHs based on the first time interval. Because the first time interval affects receiving efficiency of the PDSCH, the first time interval may be used as a consideration for determining the receive beam of the PDSCH, to optimize the receive beam of the PDSCH. In this way, the receiving efficiency of the PDSCH is improved.

In a possible implementation, any two adjacent PDSCHs in the M PDSCHs are associated with different beam indication information.

In a possible implementation, the M PDSCHs are located in a same slot.

In a possible implementation, there are M-1 first time intervals between the M PDSCHs, and the M-1 first time intervals are the same.

In a possible implementation, when each of the M-1 first time intervals is less than a first threshold, the receive beams of the M PDSCHs still use a receive beam of the PDCCH. In this possible implementation, a possibility that the terminal device receives the M PDSCHs is greatly increased, so that receiving efficiency of the terminal device can be improved.

In a possible implementation, the receive beams of the M PDSCHs are further related to a second time interval, and the second time interval is a time interval between the PDCCH and the PDSCH.

In a possible implementation, a receive beam of the 1^{st} PDSCH is determined by a value relationship between the 1^{st} first time interval and the first threshold, the 1^{st} PDSCH is a PDSCH that occupies an earliest time domain resource in the M PDSCHs, and the 1^{st} first time interval is a first time interval between the 1^{st} PDSCH and a PDSCH adjacent to the 1^{st} PDSCH; and/or a receive beam of the latter PDSCH in two adjacent PDSCHs is determined by at least one of a value relationship between a first time interval between the two adjacent PDSCHs and the first threshold, and a value relationship between a second time interval between the latter PDSCH and the PDCCH and a second threshold.

In a possible implementation, when the 1^{st} first time interval is less than the first threshold, the receive beam of the 1^{s1} PDSCH still uses the receive beam of the PDCCH. In this possible implementation, a possibility that the terminal device receives the PDSCH adjacent to the 1^{st} PDSCH is greatly increased, so that receiving efficiency of the terminal device can be improved.

In a possible implementation, when the first time interval between the two adjacent PDSCHs is less than the first threshold, the receive beam of the latter PDSCH in the two adjacent PDSCHs still uses a receive beam of the former PDSCH in the two adjacent PDSCHs, or the receive beam of the latter PDSCH in the two adjacent PDSCHs uses a beam indicated by beam indication information associated with the latter PDSCH in the DCI, and antenna panels used for receiving the latter PDSCH and the former PDSCH in the two adjacent PDSCHs are different; or when the first time interval between the two adjacent PDSCHs is greater than or equal to the first threshold, and the second time interval between the latter PDSCH and the PDCCH is greater than or equal to the second threshold, the receive beam of the latter PDSCH in the two adjacent PDSCHs uses a beam indicated by beam indication information associated with the latter PDSCH in the DCI.

In a possible implementation, there are M-1 first time intervals between the M PDSCHs, the M-1 first time intervals are the same, and when each of the M-1 first time intervals is less than the first threshold, a receive beam of a PDSCH other than the 1^{st} PDSCH in the M PDSCHs still uses the receive beam of the 1^{st} PDSCH.

In a possible implementation, the first time interval is a time interval between adjacent PDSCHs that are associated with different beam indication information in the M PDSCHs.

In a possible implementation, the M PDSCHs are located in a same slot.

In a possible implementation, there are Q-1 first time intervals between the M PDSCHs, the Q-1 first time intervals are the same, and Q is an integer less than M.

In a possible implementation, when each of the Q-1 first time intervals is less than a first threshold, the receive beams of the M PDSCHs still use a receive beam of the PDCCH. In this possible implementation, a possibility that the terminal device receives the M PDSCHs is greatly increased, so that receiving efficiency of the terminal device can be improved.

In a possible implementation, the receive beams of the M PDSCHs are further related to a second time interval, the second time interval is a time interval between the PDCCH and a PDSCH group, and one PDSCH group refers to one or more adjacent PDSCHs that are associated with same beam indication information in the M PDSCHs.

In a possible implementation, a receive beam of the 1^{st} PDSCH group is determined by a value relationship between the 1^{st} first time interval and the first threshold, the 1^{st} PDSCH group is a PDSCH group that occupies an earliest time domain resource in the M PDSCHs, and the 1^{st} first time interval is a first time interval between the 1^{st} PDSCH group and a PDSCH group adjacent to the 1^{st} PDSCH group; and/or a receive beam of the latter PDSCH group in two adjacent PDSCH groups is determined by at least one of a value relationship between a first time interval between the two adjacent PDSCH groups and the first threshold, and a value relationship between a second time interval between the latter PDSCH group and the PDCCH and a second threshold.

In a possible implementation, when the 1^{st} first time interval is less than the first threshold, the receive beam of the 1^{st} PDSCH group still uses the receive beam of the PDCCH. In this possible implementation, a possibility that the terminal device receives the PDSCH adjacent to the 1^{st} PDSCH group is greatly increased, so that receiving efficiency of the terminal device can be improved.

In a possible implementation, when the first time interval between the two adjacent PDSCH groups is less than the first threshold, the receive beam of the latter PDSCH group in the two adjacent PDSCH groups still uses a receive beam of the former PDSCH group in the two adjacent PDSCH groups, or the receive beam of the latter PDSCH group in the two adjacent PDSCH groups uses a beam indicated by beam indication information associated with the latter PDSCH group in the DCI, and antenna panels used for receiving the latter PDSCH group and the former PDSCH group in the two adjacent PDSCH groups are different; or when the first time interval between the two adjacent PDSCH groups is greater than or equal to the first threshold, and the second time interval between the latter PDSCH group and the PDCCH is greater than or equal to the second threshold, the receive beam of the latter PDSCH group in the two adjacent PDSCH groups uses a beam indicated by beam indication information associated with the latter PDSCH group in the DCI.

In a possible implementation, there are Q-1 first time intervals between the M PDSCHs, the Q-1 first time intervals are the same, and when each of the Q-1 first time intervals is less than the first threshold, a receive beam of a PDSCH other than the 1^{st} PDSCH group in the M PDSCHs still uses the receive beam of the 1^{st} PDSCH group.

In a possible implementation, the first threshold is a time period required for the terminal device to complete beam switching.

In a possible implementation, the first threshold is determined by a first time period and a time period required for the terminal device to complete beam switching, and the first time period is a minimum waiting time period between a time point at which the terminal device completes beam switching and a time point at which the terminal device receives the PDSCH by using a beam that is switched to.

In a possible implementation, the method further includes: The terminal device receives a user capability query request message, where the user capability query request message is used to request capability information of the terminal device; and the terminal device sends a user capability query response message, where the user capability query response message includes the capability information of the terminal device, and the capability information of the terminal device includes information about the first threshold.

In a possible implementation, the M PDSCHs correspond to a same information bit.

According to a second aspect, a data receiving apparatus is provided. The apparatus includes a communications unit and a processing unit. The processing unit is configured to receive PDCCH by using the communications unit; and the processing unit is further configured to receive M PDSCHs by using the communications unit, where the M PDSCHs are scheduled by using DCI in the PDCCH, time domain resources occupied by any two of the M PDSCHs do not overlap, the M PDSCHs are associated with at least two different pieces of beam indication information, receive beams of the M PDSCHs are related to a first time interval, the first time interval is a time interval between adjacent PDSCHs in the M PDSCHs, and M is an integer greater than 1.

In a possible implementation, any two adjacent PDSCHs in the M PDSCHs are associated with different beam indication information.

In a possible implementation, the M PDSCHs are located in a same slot.

In a possible implementation, there are M-1 first time intervals between the M PDSCHs, and the M-1 first time intervals are the same.

In a possible implementation, when each of the M-1 first time intervals is less than a first threshold, the receive beams of the M PDSCHs still use a receive beam of the PDCCH.

In a possible implementation, the receive beams of the M PDSCHs are further related to a second time interval, and the second time interval is a time interval between the PDCCH and the PDSCH.

In a possible implementation, a receive beam of the 1^{st} PDSCH is determined by a value relationship between the 1^{st} first time interval and the first threshold, the 1^{st} PDSCH is a PDSCH that occupies an earliest time domain resource in the M PDSCHs, and the 1^{st} first time interval is a first time interval between the 1^{st} PDSCH and a PDSCH adjacent to the 1^{st} PDSCH; and/or a receive beam of the latter PDSCH in two adjacent PDSCHs is determined by at least one of a value relationship between a first time interval between the two adjacent PDSCHs and the first threshold, and a value relationship between a second time interval between the latter PDSCH and the PDCCH and a second threshold.

In a possible implementation, when the 1^{st} first time interval is less than the first threshold, the receive beam of the 1^{st} PDSCH still uses the receive beam of the PDCCH.

In a possible implementation, when the first time interval between the two adjacent PDSCHs is less than the first threshold, the receive beam of the latter PDSCH in the two adjacent PDSCHs still uses a receive beam of the former PDSCH in the two adjacent PDSCHs, or the receive beam of the latter PDSCH in the two adjacent PDSCHs uses a beam indicated by beam indication information associated with the latter PDSCH in the DCI, and antenna panels used for receiving the latter PDSCH and the former PDSCH in the two adjacent PDSCHs are different; or when the first time interval between the two adjacent PDSCHs is greater than or equal to the first threshold, and the second time interval between the latter PDSCH and the PDCCH is greater than or equal to the second threshold, the receive beam of the latter PDSCH in the two adjacent PDSCHs uses a beam indicated by beam indication information associated with the latter PDSCH in the DCI.

In a possible implementation, there are M-1 first time intervals between the M PDSCHs, the M-1 first time intervals are the same, and when each of the M-1 first time intervals is less than the first threshold, a receive beam of a PDSCH other than the 1^{st} PDSCH in the M PDSCHs still uses the receive beam of the 1^{st} PDSCH.

In a possible implementation, the first time interval is a time interval between adjacent PDSCHs that are associated with different beam indication information in the M PDSCHs.

In a possible implementation, the M PDSCHs are located in a same slot.

In a possible implementation, there are Q-1 first time intervals between the M PDSCHs, the Q-1 first time intervals are the same, and Q is an integer less than M.

In a possible implementation, when each of the Q-1 first time intervals is less than a first threshold, the receive beams of the M PDSCHs still use a receive beam of the PDCCH.

In a possible implementation, the receive beams of the M PDSCHs are further related to a second time interval, the second time interval is a time interval between the PDCCH and a PDSCH group, and one PDSCH group refers to one or more adjacent PDSCHs that are associated with same beam indication information in the M PDSCHs.

In a possible implementation, a receive beam of the 1^{st} PDSCH group is determined by a value relationship between the 1^{st} first time interval and the first threshold, the 1^{st} PDSCH group is a PDSCH group that occupies an earliest time domain resource in the M PDSCHs, and the 1^{st} first time interval is a first time interval between the 1^{st} PDSCH group and a PDSCH group adjacent to the 1^{st} PDSCH group; and/or a receive beam of the latter PDSCH group in two adjacent PDSCH groups is determined by at least one of a value relationship between a first time interval between the two adjacent PDSCH groups and the first threshold, and a value relationship between a second time interval between the latter PDSCH group and the PDCCH and a second threshold.

In a possible implementation, when the 1^{st} first time interval is less than the first threshold, the receive beam of the 1^{st} PDSCH group still uses the receive beam of the PDCCH.

In a possible implementation, when the first time interval between the two adjacent PDSCH groups is less than the first threshold, the receive beam of the latter PDSCH group in the two adjacent PDSCH groups still uses a receive beam of the former PDSCH group in the two adjacent PDSCH groups, or the receive beam of the latter PDSCH group in the two adjacent PDSCH groups uses a beam indicated by beam indication information associated with the latter PDSCH group in the DCI, and antenna panels used for receiving the latter PDSCH group and the former PDSCH group in the two adjacent PDSCH groups are different; or when the first time interval between the two adjacent PDSCH groups is greater than or equal to the first threshold, and the second time interval between the latter PDSCH group and the PDCCH is greater than or equal to the second threshold, the receive beam of the latter PDSCH group in the two adjacent PDSCH groups uses a beam indicated by beam indication information associated with the latter PDSCH group in the DCI.

In a possible implementation, there are Q-1 first time intervals between the M PDSCHs, the Q-1 first time intervals are the same, and when each of the Q-1 first time intervals is less than the first threshold, a receive beam of a PDSCH other than the 1^{st} PDSCH group in the M PDSCHs still uses the receive beam of the 1^{st} PDSCH group.

In a possible implementation, the first threshold is a time period required for the data receiving apparatus to complete beam switching.

In a possible implementation, the first threshold is determined by a first time period and a time period required for the data receiving apparatus to complete beam switching, and the first time period is a minimum waiting time period between a time point at which the data receiving apparatus completes beam switching and a time point at which the data receiving apparatus receives the PDSCH by using a beam that is switched to.

In a possible implementation, the apparatus further includes: The processing unit is further configured to receive a user capability query request message by using the communications unit, where the user capability query request message is used to request capability information of the data receiving apparatus; and the processing unit is further configured to send a user capability query response message by using the communications unit, where the user capability query response message includes the capability information of the data receiving apparatus, and the capability information of the data receiving apparatus includes information about the first threshold.

In a possible implementation, the M PDSCHs correspond to a same information bit.

According to a third aspect, a data sending method is provided. The method includes: A network device sends at least one PDSCH to a terminal device, where the at least one PDSCH is any one or more of M PDSCHs, the M PDSCHs are scheduled by using DCI in a PDCCH, time domain resources occupied by any two of the M PDSCHs do not overlap, the M PDSCHs are associated with at least two different pieces of beam indication information, transmit beams of the M PDSCHs are related to a first time interval, the first time interval is a time interval between adjacent PDSCHs in the M PDSCHs, and M is an integer greater than 1.

According to the method provided in the third aspect, when a plurality of PDSCHs are scheduled by using one PDCCH, the network device may determine, based on the first time interval, a transmit beam of the sent PDSCH. Because the first time interval affects receiving efficiency of the PDSCH, the first time interval may be used as a consideration for determining the transmit beam of the PDSCH, to optimize the transmit beam of the PDSCH. In this way, the receiving efficiency of the PDSCH is improved.

In a possible implementation, any two adjacent PDSCHs in the M PDSCHs are associated with different beam indication information.

In a possible implementation, the method further includes: The network device generates the at least one PDSCH.

In a possible implementation, the M PDSCHs are located in a same slot.

In a possible implementation, there are M-1 first time intervals between the M PDSCHs, and the M-1 first time intervals are the same.

In a possible implementation, when each of the M-1 first time intervals is less than a first threshold, the transmit beams of the M PDSCHs still use a transmit beam of the PDCCH. In this possible implementation, a possibility that the terminal device receives the M PDSCHs is greatly increased, so that receiving efficiency of the terminal device can be improved.

In a possible implementation, the transmit beams of the M PDSCHs are further related to a second time interval, and the second time interval is a time interval between the PDCCH and the PDSCH.

In a possible implementation, a transmit beam of the 1^{st} PDSCH is determined by a value relationship between the 1^{st} first time interval and the first threshold, the 1^{st} PDSCH is a PDSCH that occupies an earliest time domain resource in the M PDSCHs, and the 1^{st} first time interval is a first time interval between the 1^{st} PDSCH and a PDSCH adjacent to the 1^{st} PDSCH; and/or a transmit beam of the latter PDSCH in two adjacent PDSCHs is determined by at least one of a value relationship between a first time interval between the two adjacent PDSCHs and the first threshold, and a value relationship between a second time interval between the latter PDSCH and the PDCCH and a second threshold.

In a possible implementation, when the 1^{st} first time interval is less than the first threshold, the transmit beam of the 1^{st} PDSCH still uses the transmit beam of the PDCCH. In this possible implementation, a possibility that the terminal device receives the PDSCH adjacent to the 1^{st} PDSCH is greatly increased, so that receiving efficiency of the terminal device can be improved.

In a possible implementation, when the first time interval between the two adjacent PDSCHs is less than the first threshold, the transmit beam of the latter PDSCH in the two adjacent PDSCHs still uses a transmit beam of the former PDSCH in the two adjacent PDSCHs, or the transmit beam of the latter PDSCH in the two adjacent PDSCHs uses a beam indicated by beam indication information associated with the latter PDSCH in the DCI, and antenna panels used for receiving the latter PDSCH and the former PDSCH in the two adjacent PDSCHs are different; or when the first time interval between the two adjacent PDSCHs is greater than or equal to the first threshold, and the second time interval between the latter PDSCH and the PDCCH is greater than or equal to the second threshold, the transmit beam of the latter PDSCH in the two adjacent PDSCHs uses a beam indicated by beam indication information associated with the latter PDSCH in the DCI.

In a possible implementation, there are M-1 first time intervals between the M PDSCHs, the M-1 first time intervals are the same, and when each of the M-1 first time intervals is less than the first threshold, a transmit beam of a PDSCH other than the 1^{st} PDSCH in the M PDSCHs still uses the transmit beam of the 1^{st} PDSCH.

In a possible implementation, the first time interval is a time interval between adjacent PDSCHs that are associated with different beam indication information in the M PDSCHs.

In a possible implementation, the M PDSCHs are located in a same slot.

In a possible implementation, there are Q-1 first time intervals between the M PDSCHs, the Q-1 first time intervals are the same, and Q is an integer less than M.

In a possible implementation, when each of the Q-1 first time intervals is less than a first threshold, the transmit beams of the M PDSCHs still use a transmit beam of the PDCCH. In this possible implementation, a possibility that the terminal device receives the M PDSCHs is greatly increased, so that receiving efficiency of the terminal device can be improved.

In a possible implementation, the transmit beams of the M PDSCHs are further related to a second time interval, the second time interval is a time interval between the PDCCH and a PDSCH group, and one PDSCH group refers to one or more adjacent PDSCHs that are associated with same beam indication information in the M PDSCHs.

In a possible implementation, a transmit beam of the 1^{st} PDSCH group is determined by a value relationship between the 1^{st} first time interval and the first threshold, the 1^{st} PDSCH group is a PDSCH group that occupies an earliest time domain resource in the M PDSCHs, and the 1^{st} first time interval is a first time interval between the 1^{st} PDSCH group and a PDSCH group adjacent to the 1^{st} PDSCH group; and/or a transmit beam of the latter PDSCH group in two adjacent PDSCH groups is determined by at least one of a value relationship between a first time interval between the two adjacent PDSCH groups and the first threshold, and a value relationship between a second time interval between the latter PDSCH group and the PDCCH and a second threshold.

In a possible implementation, when the 1^{st} first time interval is less than the first threshold, the transmit beam of the 1^{s1} PDSCH group still uses the transmit beam of the PDCCH. In this possible implementation, a possibility that the terminal device receives the PDSCH adjacent to the 1^{st} PDSCH group is greatly increased, so that receiving efficiency of the terminal device can be improved.

In a possible implementation, when the first time interval between the two adjacent PDSCH groups is less than the first threshold, the transmit beam of the latter PDSCH group in the two adjacent PDSCH groups still uses a transmit beam of the former PDSCH group in the two adjacent PDSCH groups, or the transmit beam of the latter PDSCH group in the two adjacent PDSCH groups uses a beam indicated by beam indication information associated with the latter PDSCH group in the DCI, and antenna panels used for receiving the latter PDSCH group and the former PDSCH group in the two adjacent PDSCH groups are different; or when the first time interval between the two adjacent PDSCH groups is greater than or equal to the first threshold, and the second time interval between the latter PDSCH group and the PDCCH is greater than or equal to the second threshold, the transmit beam of the latter PDSCH group in the two adjacent PDSCH groups uses a beam indicated by beam indication information associated with the latter PDSCH group in the DCI.

In a possible implementation, there are Q-1 first time intervals between the M PDSCHs, the Q-1 first time intervals are the same, and when each of the Q-1 first time intervals is less than the first threshold, a transmit beam of a PDSCH other than the 1^{st} PDSCH group in the M PDSCHs still uses the transmit beam of the 1^{st} PDSCH group.

In a possible implementation, the first threshold is a time period required for the terminal device to complete beam switching.

In a possible implementation, the first threshold is determined by a first time period and a time period required for the terminal device to complete beam switching, and the first time period is a minimum waiting time period between a time point at which the terminal device completes beam switching and a time point at which the terminal device receives the PDSCH by using a beam that is switched to.

In a possible implementation, the method further includes: The network device sends a user capability query request message to the terminal device, where the user capability query request message is used to request capability information of the terminal device; and the network device receives a user capability query response message from the terminal device, where the user capability query response message includes the capability information of the terminal device, and the capability information of the terminal device includes information about the first threshold.

In a possible implementation, the M PDSCHs correspond to a same information bit.

According to a fourth aspect, a data sending apparatus is provided. The apparatus includes a communications unit and a processing unit. The processing unit is configured to send at least one PDSCH to a terminal device by using the communications unit, where the at least one PDSCH is any one or more of M PDSCHs, the M PDSCHs are scheduled by using DCI in a PDCCH, time domain resources occupied by any two of the M PDSCHs do not overlap, the M PDSCHs are associated with at least two different pieces of beam indication information, transmit beams of the M PDSCHs are related to a first time interval, the first time interval is a time interval between adjacent PDSCHs in the M PDSCHs, and M is an integer greater than 1.

In a possible implementation, any two adjacent PDSCHs in the M PDSCHs are associated with different beam indication information.

In a possible implementation, the processing unit is further configured to generate the at least one PDSCH.

In a possible implementation, the M PDSCHs are located in a same slot.

In a possible implementation, there are M-1 first time intervals between the M PDSCHs, and the M-1 first time intervals are the same.

In a possible implementation, when each of the M-1 first time intervals is less than a first threshold, the transmit beams of the M PDSCHs still use a transmit beam of the PDCCH.

In a possible implementation, the transmit beams of the M PDSCHs are further related to a second time interval, and the second time interval is a time interval between the PDCCH and the PDSCH.

In a possible implementation, a transmit beam of the 1^{st} PDSCH is determined by a value relationship between the 1^{st} first time interval and the first threshold, the 1^{st} PDSCH is a PDSCH that occupies an earliest time domain resource in the M PDSCHs, and the 1^{st} first time interval is a first time interval between the 1^{st} PDSCH and a PDSCH adjacent to the 1^{st} PDSCH; and/or a transmit beam of the latter PDSCH in two adjacent PDSCHs is determined by at least one of a value relationship between a first time interval between the two adjacent PDSCHs and the first threshold, and a value relationship between a second time interval between the latter PDSCH and the PDCCH and a second threshold.

In a possible implementation, when the 1^{st} first time interval is less than the first threshold, the transmit beam of the 1^{st} PDSCH still uses the transmit beam of the PDCCH.

In a possible implementation, when the first time interval between the two adjacent PDSCHs is less than the first threshold, the transmit beam of the latter PDSCH in the two adjacent PDSCHs still uses a transmit beam of the former PDSCH in the two adjacent PDSCHs, or the transmit beam of the latter PDSCH in the two adjacent PDSCHs uses a beam indicated by beam indication information associated with the latter PDSCH in the DCI, and antenna panels used for receiving the latter PDSCH and the former PDSCH in the two adjacent PDSCHs are different; or when the first time interval between the two adjacent PDSCHs is greater than or equal to the first threshold, and the second time interval between the latter PDSCH and the PDCCH is greater than or equal to the second threshold, the transmit beam of the latter PDSCH in the two adjacent PDSCHs uses a beam indicated by beam indication information associated with the latter PDSCH in the DCI.

In a possible implementation, there are M-1 first time intervals between the M PDSCHs, the M-1 first time intervals are the same, and when each of the M-1 first time intervals is less than the first threshold, a transmit beam of a PDSCH other than the 1^{st} PDSCH in the M PDSCHs still uses the transmit beam of the 1^{st} PDSCH.

In a possible implementation, the first time interval is a time interval between adjacent PDSCHs that are associated with different beam indication information in the M PDSCHs.

In a possible implementation, the M PDSCHs are located in a same slot.

In a possible implementation, there are Q-1 first time intervals between the M PDSCHs, the Q-1 first time intervals are the same, and Q is an integer less than M.

In a possible implementation, when each of the Q-1 first time intervals is less than a first threshold, the transmit beams of the M PDSCHs still use a transmit beam of the PDCCH.

In a possible implementation, the transmit beams of the M PDSCHs are further related to a second time interval, the second time interval is a time interval between the PDCCH and a PDSCH group, and one PDSCH group refers to one or more adjacent PDSCHs that are associated with same beam indication information in the M PDSCHs.

In a possible implementation, a transmit beam of the 1^{st} PDSCH group is determined by a value relationship between the 1^{st} first time interval and the first threshold, the 1^{st} PDSCH group is a PDSCH group that occupies an earliest time domain resource in the M PDSCHs, and the 1^{st} first time interval is a first time interval between the 1^{st} PDSCH group and a PDSCH group adjacent to the 1^{st} PDSCH group; and/or a transmit beam of the latter PDSCH group in two adjacent PDSCH groups is determined by at least one of a value relationship between a first time interval between the two adjacent PDSCH groups and the first threshold, and a value relationship between a second time interval between the latter PDSCH group and the PDCCH and a second threshold.

In a possible implementation, when the 1^{st} first time interval is less than the first threshold, the transmit beam of the 1^{st} PDSCH group still uses the transmit beam of the PDCCH.

In a possible implementation, when the first time interval between the two adjacent PDSCH groups is less than the first threshold, the transmit beam of the latter PDSCH group in the two adjacent PDSCH groups still uses a transmit beam of the former PDSCH group in the two adjacent PDSCH groups, or the transmit beam of the latter PDSCH group in the two adjacent PDSCH groups uses a beam indicated by beam indication information associated with the latter PDSCH group in the DCI, and antenna panels used for receiving the latter PDSCH group and the former PDSCH group in the two adjacent PDSCH groups are different; or when the first time interval between the two adjacent PDSCH groups is greater than or equal to the first threshold, and the second time interval between the latter PDSCH group and the PDCCH is greater than or equal to the second threshold, the transmit beam of the latter PDSCH group in the two adjacent PDSCH groups uses a beam indicated by beam indication information associated with the latter PDSCH group in the DCI.

In a possible implementation, there are Q-1 first time intervals between the M PDSCHs, the Q-1 first time intervals are the same, and when each of the Q-1 first time intervals is less than the first threshold, a transmit beam of a PDSCH other than the 1^{st} PDSCH group in the M PDSCHs still uses the transmit beam of the 1^{st} PDSCH group.

In a possible implementation, the first threshold is a time period required for the terminal device to complete beam switching.

In a possible implementation, the first threshold is determined by a first time period and a time period required for the terminal device to complete beam switching, and the first time period is a minimum waiting time period between a time point at which the terminal device completes beam switching and a time point at which the terminal device receives the PDSCH by using a beam that is switched to.

In a possible implementation, the processing unit is configured to send a user capability query request message to the terminal device by using the communications unit, where the user capability query request message is used to request capability information of the terminal device; and the processing unit is configured to receive a user capability query response message from the terminal device by using the communications unit, where the user capability query response message includes the capability information of the terminal device, and the capability information of the terminal device includes information about the first threshold.

In a possible implementation, the M PDSCHs correspond to a same information bit.

According to a fifth aspect, a data receiving method is provided. The method includes: A terminal device receives N PDCCHs; and the terminal device receives M PDSCHs, where the M PDSCHs are scheduled by using DCI in the N PDCCHs, time domain resources occupied by any two of the M PDSCHs do not overlap, the M PDSCHs are associated with at least two different pieces of beam indication information, receive beams of the M PDSCHs are related to a first time interval, the first time interval is a time interval between adjacent PDSCHs in the M PDSCHs, and M is an integer greater than 1.

According to the method provided in the fifth aspect, when a plurality of PDSCHs are scheduled by using a plurality of PDCCHs, a network device may determine, based on the first time interval, a transmit beam of the sent PDSCH. Because the first time interval affects receiving efficiency of the PDSCH, the first time interval may be used as a consideration for determining the transmit beam of the PDSCH, to optimize the transmit beam of the PDSCH. In this way, the receiving efficiency of the PDSCH is improved.

In a possible implementation, the M PDSCHs are located in a same slot.

In a possible implementation, there are M-1 first time intervals between the M PDSCHs, and the M-1 first time intervals are the same.

In a possible implementation, the transmit beams of the M PDSCHs are further related to a second time interval, and the second time interval is a time interval between the PDCCH and the PDSCH.

In a possible implementation, the N PDCCHs are a PDCCH 1 and a PDCCH 2, the M PDSCHs are a PDSCH 1 and a PDSCH 2, the PDSCH 1 is scheduled by using DCI in the PDCCH 1, the PDSCH 2 is scheduled by using DCI in the PDCCH 2, a time domain resource of the PDCCH 1 is before that of the PDCCH 2, the time domain resource of the PDCCH 2 is before that of the PDSCH 1, and the time domain resource of the PDSCH 1 is before that of the PDSCH 2.

In a possible implementation, if a first time interval between the PDSCH 1 and the PDSCH 2 is less than a first threshold, a receive beam of the PDSCH 1 still uses a receive beam of the PDCCH 1 or the PDCCH 2; if a second time interval between the PDSCH 1 and the PDCCH 1 is greater than or equal to a second threshold, and a first time interval between the PDSCH 1 and the PDSCH 2 is greater than or equal to a first threshold, a receive beam of the PDSCH 1 uses a beam indicated by beam indication information associated with the PDSCH 1 in the DCI in the PDCCH 1; or if a second time interval between the PDSCH 1 and the PDCCH 1 is less than a second threshold, a receive beam of the PDSCH 1 still uses a receive beam of the PDCCH 1 or the PDCCH 2.

In a possible implementation, if a second time interval between the PDSCH 2 and the PDCCH 2 is greater than or equal to a second threshold, and a first time interval between the PDSCH 1 and the PDSCH 2 is greater than or equal to a first threshold, a receive beam of the PDSCH 2 uses a beam indicated by beam indication information associated with the PDSCH 2 in the DCI in the PDCCH 2; if a first time interval between the PDSCH 1 and the PDSCH 2 is less than a first threshold, a receive beam of the PDSCH 2 still uses a receive beam of the PDSCH 1; or if a second time interval between the PDSCH 2 and the PDCCH 2 is less than a second threshold, a receive beam of the PDSCH 2 still uses a receive beam of the PDCCH 1 or the PDCCH 2.

In a possible implementation, the first threshold is a time period required for the terminal device to complete beam switching.

In a possible implementation, the first threshold is determined by a first time period and a time period required for the terminal device to complete beam switching, and the first time period is a minimum waiting time period between a time point at which the terminal device completes beam switching and a time point at which the terminal device receives the PDSCH by using a beam that is switched to.

In a possible implementation, the method further includes: The terminal device receives a user capability query request message, where the user capability query request message is used to request capability information of the terminal device; and the terminal device sends a user capability query response message, where the user capability query response message includes the capability information of the terminal device, and the capability information of the terminal device includes information about the first threshold.

In a possible implementation, the M PDSCHs correspond to a same information bit.

According to a sixth aspect, a data receiving apparatus is provided. The apparatus includes a processor. The processor is connected to a memory. The memory is configured to store computer-executable instructions. The processor executes the computer-executable instructions stored in the memory, to implement any method provided in the fifth aspect. The memory and the processor may be integrated together, or may be independent devices. If the memory and the processor are independent devices, the memory may be located inside the data receiving apparatus, or may be located outside the data receiving apparatus.

In a possible implementation, the processor includes a logic circuit and at least one of an input interface and an output interface. The output interface is configured to perform a sending action in a corresponding method, and the input interface is configured to perform a receiving action in the corresponding method.

In a possible implementation, the data receiving apparatus further includes a communications interface and a communications bus. The processor, the memory, and the communications interface are connected by using the communications bus. The communications interface is configured to perform sending and receiving actions in a corresponding method. The communications interface may also be referred to as a transceiver. Optionally, the communications interface includes at least one of a transmitter and a receiver. In this case, the transmitter is configured to perform a sending action in a corresponding method, and the receiver is configured to perform a receiving action in the corresponding method.

In a possible implementation, the data receiving apparatus exists in a product form of a chip.

According to a seventh aspect, a data sending method is provided. The method includes: A network device sends at least one PDSCH to a terminal device, where the at least one PDSCH is any one or more of M PDSCHs, the M PDSCHs are scheduled by using DCI in N PDCCHs, time domain resources occupied by any two of the M PDSCHs do not overlap, the M PDSCHs are associated with at least two different pieces of beam indication information, transmit beams of the M PDSCHs are related to a first time interval, the first time interval is a time interval between adjacent PDSCHs in the M PDSCHs, and M is an integer greater than 1.

According to the method provided in the seventh aspect, when a plurality of PDSCHs are scheduled by using a plurality of PDCCHs, the network device may determine, based on the first time interval, a transmit beam of the sent PDSCH. Because the first time interval affects receiving efficiency of the PDSCH, the first time interval may be used as a consideration for determining the transmit beam of the PDSCH, to optimize the transmit beam of the PDSCH. In this way, the receiving efficiency of the PDSCH is improved.

In a possible implementation, the method further includes: The network device generates the at least one PDSCH.

In a possible implementation, the M PDSCHs are located in a same slot.

In a possible implementation, there are M-1 first time intervals between the M PDSCHs, and the M-1 first time intervals are the same.

In a possible implementation, the transmit beams of the M PDSCHs are further related to a second time interval, and the second time interval is a time interval between the PDCCH and the PDSCH.

In a possible implementation, the N PDCCHs are a PDCCH 1 and a PDCCH 2, the M PDSCHs are a PDSCH 1 and a PDSCH 2, the PDSCH 1 is scheduled by using DCI in the PDCCH 1, the PDSCH 2 is scheduled by using DCI in the PDCCH 2, a time domain resource of the PDCCH 1 is before that of the PDCCH 2, the time domain resource of the PDCCH 2 is before that of the PDSCH 1, and the time domain resource of the PDSCH 1 is before that of the PDSCH 2.

In a possible implementation, if a first time interval between the PDSCH 1 and the PDSCH 2 is less than a first threshold, a transmit beam of the PDSCH 1 still uses a transmit beam of the PDCCH 1 or the PDCCH 2; if a second time interval between the PDSCH 1 and the PDCCH 1 is greater than or equal to a second threshold, and a first time interval between the PDSCH 1 and the PDSCH 2 is greater than or equal to a first threshold, a transmit beam of the PDSCH 1 uses a beam indicated by beam indication information associated with the PDSCH 1 in the DCI in the PDCCH 1; or if a second time interval between the PDSCH 1 and the PDCCH 1 is less than a second threshold, a transmit beam of the PDSCH 1 still uses a transmit beam of the PDCCH 1 or the PDCCH 2.

In a possible implementation, if a second time interval between the PDSCH 2 and the PDCCH 2 is greater than or equal to a second threshold, and a first time interval between the PDSCH 1 and the PDSCH 2 is greater than or equal to a first threshold, a transmit beam of the PDSCH 2 uses a beam indicated by beam indication information associated with the PDSCH 2 in the DCI in the PDCCH 2; if a first time interval between the PDSCH 1 and the PDSCH 2 is less than a first threshold, a transmit beam of the PDSCH 2 still uses a transmit beam of the PDSCH 1; or if a second time interval between the PDSCH 2 and the PDCCH 2 is less than a second threshold, a transmit beam of the PDSCH 2 still uses a transmit beam of the PDCCH 1 or the PDCCH 2.

In a possible implementation, the first threshold is a time period required for the terminal device to complete beam switching.

In a possible implementation, the first threshold is determined by a first time period and a time period required for the terminal device to complete beam switching, and the first time period is a minimum waiting time period between a time point at which the terminal device completes beam switching and a time point at which the terminal device receives the PDSCH by using a beam that is switched to.

In a possible implementation, the method further includes: The network device sends a user capability query request message to the terminal device, where the user capability query request message is used to request capability information of the terminal device; and the network device receives a user capability query response message from the terminal device, where the user capability query response message includes the capability information of the terminal device, and the capability information of the terminal device includes information about the first threshold.

In a possible implementation, the M PDSCHs correspond to a same information bit.

According to an eighth aspect, a data sending apparatus is provided. The apparatus includes a processor. The processor is connected to a memory. The memory is configured to store computer-executable instructions. The processor executes the computer-executable instructions stored in the memory, to implement any method provided in the seventh aspect. The memory and the processor may be integrated together, or may be independent devices. If the memory and the processor are independent devices, the memory may be located inside the data sending apparatus, or may be located outside the data sending apparatus.

In a possible implementation, the processor includes a logic circuit and at least one of an input interface and an output interface. The output interface is configured to perform a sending action in a corresponding method, and the input interface is configured to perform a receiving action in the corresponding method.

In a possible implementation, the data sending apparatus further includes a communications interface and a communications bus. The processor, the memory, and the communications interface are connected by using the communications bus. The communications interface is configured to perform sending and receiving actions in a corresponding method. The communications interface may also be referred to as a transceiver. Optionally, the communications interface includes at least one of a transmitter and a receiver. In this case, the transmitter is configured to perform a sending action in a corresponding method, and the receiver is configured to perform a receiving action in the corresponding method.

In a possible implementation, the data sending apparatus exists in a product form of a chip.

According to a ninth aspect, a communications system is provided. The communications system includes the data receiving apparatus provided in the second aspect and the data sending apparatus provided in the fourth aspect, or the data receiving apparatus provided in the sixth aspect and the data sending apparatus provided in the eighth aspect.

According to a tenth aspect, a computer-readable storage medium is provided. The computer-readable storage medium includes instructions. When the instructions are run on a computer, the computer is enabled to perform any method provided in the first aspect, the third aspect, the fifth aspect, or the seventh aspect.

According to an eleventh aspect, a computer program product including instructions is provided. When the instructions are run on a computer, the computer is enabled to perform any method provided in the first aspect, the third aspect, the fifth aspect, or the seventh aspect.

For technical effects brought by any one of the implementations of the second aspect, the fourth aspect, the sixth aspect, or the eighth aspect to the eleventh aspect, refer to technical effects brought by a corresponding implementation of the first aspect, the third aspect, the fifth aspect, or the seventh aspect. Details are not described herein again.

It should be noted that various possible implementations of any one of the foregoing aspects may be combined provided that the solutions are not contradictory.

### BRIEF DESCRIPTION OF DRAWINGS

FIG. 1 is a schematic diagram of positions of a PDCCH and a PDSCH in time domain according to an embodiment of this application;
FIG. 2 is a schematic composition diagram of a network architecture according to an embodiment of this application;
FIG. 3 is a schematic diagram of a position of an AGC circuit according to an embodiment of this application;
FIG. 4(a) and FIG. 4(b) are a schematic diagram of a coordinated multipoint transmission/reception scenario according to an embodiment of this application;
FIG. 5 is a schematic diagram of communication between TRPs and a terminal device according to an embodiment of this application;
FIG. 6 is a schematic diagram of positions of a PDCCH and a PDSCH in time domain according to an embodiment of this application;
FIG. 7 is a flowchart of a data receiving and sending method according to an embodiment of this application;
FIG. 7A(a) to FIG. 10 each are a schematic diagram of positions of a PDCCH and a PDSCH in time domain according to an embodiment of this application;
FIG. 11 is a flowchart of a data receiving and sending method according to an embodiment of this application;
FIG. 12 is a schematic diagram of positions of a PDCCH and a PDSCH in time domain according to an embodiment of this application;
FIG. 13 is a schematic composition diagram of a communications apparatus according to an embodiment of this application;
FIG. 14 and FIG. 15 each are a schematic diagram of a hardware structure of a communications apparatus according to an embodiment of this application;
FIG. 16 is a schematic diagram of a hardware structure of a terminal device according to an embodiment of this application; and
FIG. 17 is a schematic diagram of a hardware structure of a network device according to an embodiment of this application.

### DESCRIPTION OF EMBODIMENTS

In the descriptions of this application, unless otherwise specified, "/" means "or". For example, A/B may represent A or B. "And/or" in this specification describes an association relationship for describing associated objects and represents that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, the term such as "example" or "for example" is used to represent giving an example, an illustration, or descriptions. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

The technical solutions provided in the embodiments of this application may be applied to various communications systems, for example, including but not limited to an LTE system, a 5th generation (5th-generation, 5G for short) system, an NR system, and a future evolved system, or a plurality of converged communications systems. The 5G system may be a non-standalone (non-standalone, NSAfor short) 5G system or a standalone (standalone, SA for short) 5G system.

A communications system to which the technical solutions provided in this application are applicable may include at least one network device and at least one terminal device. One or more terminal devices in the at least one terminal device may communicate with one or more network devices in the at least one network device. Refer to FIG. 2. In a first case, one terminal device may communication with a plurality of network devices (for example, a network device 1 and a network device 2). That is, the plurality of network devices may all send signaling and downlink data to the terminal device, and the terminal device may also send uplink data to the plurality of network devices. In this case, if the network device is a TRP, and the terminal device is in a coordinated transmission state of a plurality of network devices, ideal backhaul (ideal backhaul) may be performed between the network devices, that is, there is basically no transmission delay between the network devices. In a second case, one network device may communicate with one terminal device by using different beams. For example, one network device sends downlink data to the terminal device on different time domain resources by using different beams.

The network device is an entity that is on a network side and that is configured to send a signal, or receive a signal, or send a signal and receive a signal. The network device may be an apparatus that is deployed in a radio access network (radio access network, RAN for short) and that provides a wireless communication function for the terminal device, for example, may be a TRP, a base station, and control nodes in various forms (for example, a network controller and a radio controller (for example, a radio controller in a cloud radio access network (cloud radio access network, CRAN for short) scenario)). Specifically, the network device may be macro base stations, micro base stations (also referred to as small cells), relay stations, access points (access points, APs for short), or the like in various forms, or may be an antenna panel of a base station. The control node may be connected to a plurality of base stations, and configure resources for a plurality of terminal devices within coverage of the plurality of base stations. In systems using different radio access technologies, names of devices having functions of a base station may vary. For example, the device may be referred to as an evolved NodeB (evolved NodeB, eNB or eNodeB for short) in an LTE system, or may be referred to as a next generation node base station (next generation node base station, gNB for short) in a 5G system or an NR system. A specific name of the base station is not limited in this application. Alternatively, the network device may be a network device in a future evolved public land mobile network (public land mobile network, PLMN for short) or the like.

In some deployments, the network device may include a centralized unit (centralized unit, CU for short) and a distributed unit (Distributed Unit, DU for short). The network device may further include an active antenna unit (active antenna unit, AAU for short). The CU implements some functions of the network device, and the DU implements some functions of the network device. For example, the CU is responsible for processing a non-real-time protocol and service, and implements functions of a radio resource control (radio resource control, RRC for short) layer and a packet data convergence protocol (packet data convergence protocol, PDCP for short) layer. The DU is responsible for processing a physical layer protocol and a real-time service, and implements functions of a radio link control (radio link control, RLC for short) layer, a media access control (media access control, MAC for short) layer, and a physical (physical, PHY for short) layer. The AAU implements some physical layer processing functions, radio frequency processing, and a function related to an active antenna. Information at the RRC layer eventually becomes information at the PHY layer, or is converted from the information at the PHY layer. Therefore, in this architecture, higher layer signaling, for example, RRC layer signaling or PDCP layer signaling, may also be considered as being sent by the DU or sent by the DU and the AAU. It may be understood that the network device may be a device including one or more of a CU node, a DU node, and an AAU node. In addition, the CU may be classified as a network device in a RAN, or the CU may be classified as a network device in a core network (core network, CN for short). This is not limited herein.

The terminal device is an entity that is on a user side and that is configured to receive a signal, or send a signal, or receive a signal and send a signal. The terminal device is configured to provide one or more of a voice service and a data connectivity service for a user. The terminal device may also be referred to as user equipment (user equipment, UE for short), a terminal, an access terminal, a subscriber unit, a subscriber station, a mobile station, a remote station, a remote terminal, a mobile device, a user terminal, a wireless communications device, a user agent, or a user apparatus. The terminal device may be a mobile station (mobile station, MS for short), a subscriber unit (subscriber unit), an unmanned aerial vehicle, an internet of things (internet of things, IoT for short) device, a station (station, ST for short) in a wireless local area network (wireless local area networks, WLAN for short), a cellular phone (cellular phone), a smartphone (smart phone), a cordless phone, a wireless data card, a tablet computer, a session initiation protocol (session initiation protocol, SIP for short) phone, a wireless local loop (wireless local loop, WLL for short) station, a personal digital assistant (personal digital assistant, PDA for short) device, a laptop computer (laptop computer), a machine type communication (machine type communication, MTC for short) terminal, a handheld device having a wireless communication function, a computing device or another processing device connected to a wireless modem, a vehicle-mounted device, or a wearable device (which may also be referred to as a wearable intelligent device). The terminal device may alternatively be a terminal device in a next-generation communications system, for example, a terminal device in the 5G system, a terminal device in the future evolved PLMN, or a terminal device in the NR system.

The technical solutions provided in the embodiments of this application may be applied to a plurality of communication scenarios, for example, a machine to machine (machine to machine, M2M for short) scenario, a macro-micro communication scenario, an enhanced mobile broadband (enhanced mobile broadband, eMBB for short) scenario, an ultra-reliable and low-latency communication (ultra-reliable & low latency communication, URLLC for short) scenario, an internet of vehicles scenario, and a massive machine type communication (massive machine type communication, mMTC for short) scenario.

A network architecture and a service scenario that are described in the embodiments of this application are intended to describe the technical solutions in the embodiments of this application more clearly, and do not constitute a limitation on the technical solutions provided in the embodiments of this application. A person of ordinary skill in the art may know that with evolution of a network architecture and emergence of a new service scenario, the technical solutions provided in the embodiments of this application are also applicable to similar technical problems.

To make the embodiments of this application clearer, the following briefly describes concepts and some content that are related to the embodiments of this application.

### 1. Time unit

A time unit is a resource unit in a time domain resource. The time unit in the embodiments of this application may be an orthogonal frequency division multiplexing (orthogonal frequency division multiplexing (orthogonal frequency division multiplexing, OFDM for short) symbol (referred to as a symbol for short below), a plurality of consecutive symbols, a mini-slot (minislot), a slot (slot), or the like.

In an NR system, for a normal (normal) cyclic prefix (cyclic prefix, CP for short), one slot includes 14 symbols. For an extended (extended) CP, one slot includes 12 symbols. In the embodiments of this application, unless otherwise specified, one slot includes 14 symbols.

In one slot, 14 symbols are sequentially numbered in ascending order, where a minimum number is 0, and a maximum number is 13. In the embodiments of this application, a symbol with an index (namely, a number) being x is denoted as a symbol #x, and one slot includes a symbol #0 to a symbol #13, where x is an integer greater than or equal to 0 and less than or equal to 13.

The time unit may also be referred to as a time domain unit, a time domain granularity, or the like.

### 2. Automatic gain control (automatic gain control, AGC for short) circuit

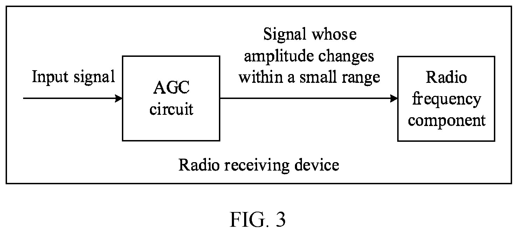

An AGC circuit is an important circuit in a radio receiving device (for example, a terminal device). Refer to FIG. 3. The circuit may adjust an input signal whose amplitude changes greatly to a signal whose amplitude changes within a small range, and then input the signal to a radio frequency component of the radio receiving device. Because the radio frequency component of the radio receiving device has an optimal received signal strength range at the beginning of design, an input signal received by the radio frequency component within the range is not distorted. However, in an actual communication process, a received signal of the radio frequency component may be beyond the optimal received signal strength range due to various reasons. Therefore, strength of an input signal needs to be scaled to the optimal received signal strength range by using the AGC circuit at a front end of the radio frequency component.

The AGC circuit limits an amplitude change of an output signal by controlling a gain of a controllable gain amplifier, and a gain change depends on a change in the strength of the input signal. Therefore, when the strength of the input signal changes from one value to another value, the AGC circuit needs to change the gain of the controllable gain amplifier from one value to another value. However, it takes specific time for the gain of the controllable gain amplifier to change from one value to another value, and the time may be referred to as response time of the AGC circuit. If the response time is excessively short, the strength of the output signal of the AGC circuit is prone to fluctuate with instantaneous fluctuation of the input signal, causing distortion of the output signal. If the response time is excessively long, an adjustment delay of the AGC circuit affects receiving efficiency of a communications system. Therefore, the response time needs to be set based on an actual requirement of the communications system. For example, if amplitudes of two input signals differ by 6 dB, the response time of the AGC circuit is approximately 10 microseconds (µs).

### 3. Beam (beam)

In a future communications system (for example, a 5G system), a high frequency band is used for communication and transmission. A main problem of the high-frequency communication is that energy of a signal sharply decreases as a transmission distance increases, resulting in a short transmission distance of the signal. To overcome this problem, a beamforming technology is used in the high-frequency communication, and a large-scale antenna array is used for weighted processing, so that signal energy is concentrated in a relatively small range, to form a signal similar to an optical beam (the signal is referred to as a beam), thereby extending a transmission distance.

The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, a hybrid beamforming technology, or the like. Different beams may be considered as different resources. Same information or different information may be sent on different beams. Optionally, a plurality of beams having a same communication feature or similar communication features may be considered as one beam.

Beams include a transmit beam (which may also be referred to as a transmit beam) and a receive beam. The transmit beam may refer to distribution of signal strength formed in different directions in space after a signal is transmitted by using an antenna, and the receive beam may refer to distribution that an antenna array enhances or weakens reception of a radio signal in different directions in space.

The beam may be understood as a spatial filter (spatial filter) or a spatial parameter (spatial parameters). A beam used to send a signal may be referred to as a transmit beam (transmission beam, that is, a Tx beam), a spatial domain transmit filter (spatial domain transmit filter), or a spatial domain transmit parameter (spatial domain transmit parameter). A beam used to receive a signal may be referred to as a receive beam (reception beam, that is, an Rx beam), a spatial domain receive filter (spatial domain receive filter), or a spatial domain receive parameter (spatial domain receive parameter).

The transmit and receive beams need to be aligned with each other as much as possible to maximize a beamforming gain and ensure communication quality and/or cell coverage. Specifically, there may be a pairing relationship between the transmit and receive beams. The pairing relationship between the transmit and receive beams is a pairing relationship between the transmit beam and the receive beam, that is, a pairing relationship between a spatial domain transmit filter and a spatial domain receive filter. A relatively large beamforming gain may be obtained by transmitting a signal between the transmit beam and the receive beam that have the pairing relationship.

A transmit end may send a reference signal through beam sweeping, and a receive end may also receive the reference signal through beam sweeping. Specifically, the transmit end may form different directional beams in space through beamforming, and may perform polling on a plurality of different directional beams, to transmit a reference signal by using the different directional beams, so that a power for transmitting the reference signal can reach a maximum value in a direction directed by a transmit beam. The receive end may also form different directional beams in space through beamforming, and may perform polling on a plurality of different directional beams, to receive the reference signal by using the different directional beams, so that a power for receiving the reference signal by the receive end in a direction directed by a receive beam can reach a maximum value.

When traversing each transmit beam and each receive beam, the receive end may perform channel measurement based on the received reference signal, and report, to the transmit end by using channel state information (channel state information, CSI for short), a result obtained through measurement. For example, the receive end may report some reference signal resources with relatively large reference signal received powers (reference signal receiving powers, RSRPs for short) to the transmit end, and report a reference signal resource identifier of the associated reference signal resource, so that the transmit end sends, during transmission of data or signaling, the data or the signaling by using a transmit beam with relatively good channel qualify, and the receive end may receive the data or the signaling by using a receive beam having a pairing relationship with the transmit beam.

In an NR system, a quasi colocation (quasi colocation, QCL for short) relationship between two reference signals may be indicated by using a transmission configuration indicator (transmission configuration indicator, TCI for short). A target reference signal is generally a demodulation reference signal (demodulation reference signal, DMRS for short), and the referenced reference signal may be generally a channel state information reference signal (channel state information reference signal, CSI-RS for short) and/or a synchronization signal and physical broadcast channel block (synchronous signal/physical broadcast channel block, which may be referred to as an SS/PBCH block for short, or may be referred to as an SSB for short). One TCI state (TCI state) may include one or two referenced reference signals and an associated QCL type (QCL Type). QCL types may be further classified into a type A (Type A), a type B (Type B), a type C (Type C), and a type D (Type D).

The type D is used to describe a spatial domain receive parameter, and the spatial domain receive parameter described in the type D may include one or more of the following: an angle of arrival (angle of arrival, AOA for short), an average AOA, an AOA spread, an angle of departure (angle of departure, AOD for short), an average AOD, an AOD spread, a receive antenna spatial correlation parameter, a transmit antenna spatial correlation parameter, a transmit beam, a receive beam, a resource identifier, and the like.

In more general terms, a beam, a spatial parameter (a spatial domain transmit parameter and/or a spatial domain receive parameter), and the QCL type-D may be understood as common to each other in a broad sense. To be specific, a beam is a most common description, a spatial parameter is a term commonly used in a protocol or a standard, and the QCL type-D is indication information associated with a specific reference signal. In an NR protocol, the beam may be, for example, a spatial filter (spatial filter). However, it should be understood that this application does not exclude a possibility that another term is defined in an evolution process of the NR protocol or in a future protocol to indicate a same or similar meaning. It should be noted that, in embodiments shown below, a "beam" is used as an example to describe a method provided in the embodiments of this application.

Based on the foregoing descriptions about the beam, "a receive beam of a PDSCH" in the following descriptions of the embodiments of this application refers to "a beam for receiving the PDSCH", and may also be described as "a spatial parameter for receiving the PDSCH" or "a spatial domain receive parameter of the PDSCH". Similar descriptions may also be made about "a receive beam of a PDCCH", "a transmit beam of a PDSCH", and "a transmit beam of the PDCCH", and details are not described again.

In the embodiments of this application, that "a receive beam of a PDSCH uses a beam indicated by beam indication information associated with the latter PDSCH in DCI" in the following descriptions may also be understood as that "QCL information of an antenna port associated with the PDSCH (which may also be referred to as an antenna port of a DMRS associated with the PDSCH) is determined based on a TCI state indicated by a TCI indication field in DCI for scheduling the PDSCH.

In the embodiments of this application, that "M PDSCHs are associated with at least two different pieces of beam indication information" in the following descriptions means that "the M PDSCHs are associated with at least two different TCIs or TCI state indications", or "antenna ports of the M PDSCHs (which may also be referred to as antenna ports of DMRSs of the M PDSCHs) are associate at least two different pieces of QCL information".

In the embodiments of this application, that "a receive beam of a PDSCH still uses a receive beam of a PDCCH" in the following descriptions means that "the PDSCH and the PDCCH use a same receive beam", or "an antenna port of the PDSCH (which may also be referred to as an antenna port of a DMRS of the PDSCH) is quasi colocated with QCL information associated with the PDCCH". It should be noted that, if QCL information is not configured for the PDCCH in this case, but QCL information of an SSB is associated with the PDCCH as a QCL assumption of the PDCCH, that "the receive beam of the PDSCH still uses the receive beam of the PDCCH" may also be understood as that "the receive beam of the PDSCH still uses the QCL assumption of the PDCCH, that is, the receive beam of the PDSCH still uses a receive beam of the SSB associated with the PDCCH".

Particularly, when the QCL information is used to represent a beam, the QCL may be QCL whose type is D, that is, type-D QCL.

### 4. Multi-antenna panel (panel) capability of the terminal device

One terminal device may support one antenna panel, or may support a plurality of antenna panels. When the terminal device supports a plurality of antenna panels, the terminal device has a multi-antenna panel capability. A manner in which the network device learns whether the terminal device has the multi-antenna panel capability may be: The terminal device reports a terminal capability (which may also be referred to as a UE capability, that is, a UE capability), or whether the terminal has the multi-antenna panel capability is determined according to a protocol. The terminal device having the multi-antenna panel capability may transmit different beams by using a plurality of antenna panels, to send and/or receive signals by using a plurality of beams. To reduce power consumption of the terminal device, some of the plurality of antenna panels may be in an active state, and the other antenna panels may be in a dormant state. When required (for example, an antenna panel activation condition is satisfied), the terminal device may activate the dormant antenna panel, to send and receive a signal by using the antenna panel.

The antenna panel activation condition may be determined according to an actual application scenario, and details are not described herein.

### 5. Multipoint transmission technology

A multipoint transmission technology is a technology in which a plurality of TRPs transmit data. In the multipoint transmission technology, the plurality of TRPs may cooperatively send a downlink signal to a user, and/or cooperatively receive an uplink signal of a user.

The multipoint transmission technology is mainly classified into joint transmission (Joint transmission, JT for short), dynamic point selection (dynamic point selection, DPS for short), dynamic cell selection (dynamic cell selection, DCS for short), coordinated beamforming (coordinated beam forming, CB for short), coordinated scheduling (coordinated scheduling, CS for short), and the like.

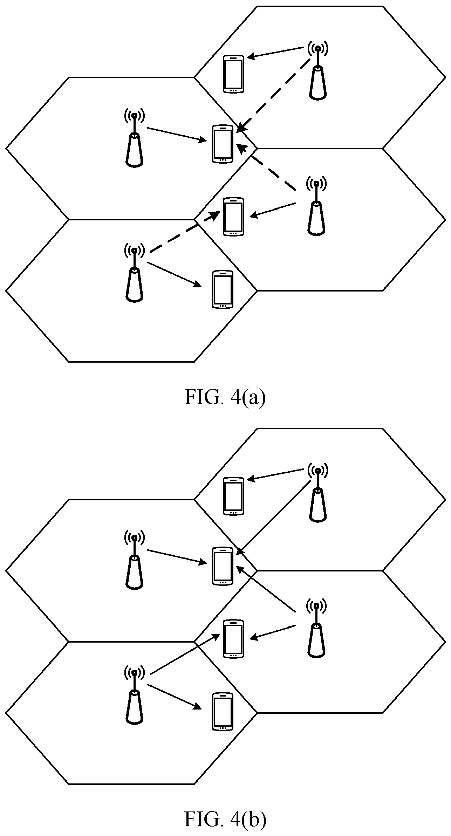

Multipoint transmission in this application is mainly a joint transmission (or referred to as coordinated multipoint transmission/reception) scenario. A transmission rate of a terminal device at a cell edge can be increased through joint transmission of the plurality of TRPs. For example, in a non-joint transmission scenario, when a terminal device is located at a cell edge, communication of the terminal device is interfered with by a signal sent by a neighboring cell of a serving cell, as shown in FIG. 4(a). In FIG. 4(a) and FIG. 4(b), a solid line represents useful data generated for the terminal device, and a dashed line represents interference to the terminal device. In the joint transmission scenario, a plurality of TRPs jointly send data to a terminal device, and the terminal device receives a plurality of pieces of useful data, as shown in FIG. 4(b). Therefore, a signal sent by a neighboring cell of a serving cell not only causes no interference to the terminal device, but also can increase the transmission rate of the terminal device at the cell edge.

### 6. Multi-DCI based multipoint transmission (multi-DCI based multi-TRP transmission)

In the joint transmission scenario, the plurality of TRPs may send respective PDCCHs including DCI to a same terminal device, and each PDCCH is used to schedule a corresponding PDSCH. In this case, the plurality of TRPs may schedule data relatively independently with limited interaction. This transmission manner may be referred to as multi-DCI based multipoint transmission.

### 7. Coordinated multipoint repeated transmission

In 5G and a future evolved communications technology, URLLC is one of important service types. In a URLLC service, a data throughput is always no longer a main measurement indicator. In comparison, a low bit error rate and a low delay become most critical indicators. In the multipoint transmission technology, there is channel diversity between channels of the plurality of TRPs. Reliability of a communications link can be improved by repeatedly sending data. Therefore, the multipoint transmission technology may be used to enhance reliability of the URLLC service.

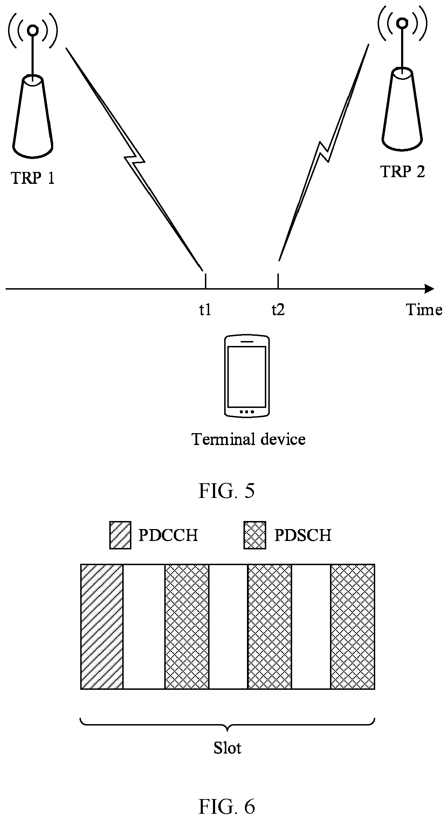

To improve data transmission reliability, the plurality of TRPs may repeatedly send data to the terminal device by using different channels in a time division manner. For example, refer to FIG. 5. A TRP 1 and a TRP 2 may separately send, at t1 and t2, data corresponding to a same information bit to a same terminal device. In this case, a terminal device in coordinated multipoint transmission/reception may receive, in a time division manner, the data that is sent by the plurality of TRPs and that corresponds to the same information bit. After receiving a plurality of pieces of data, the terminal device may process the received data to obtain soft information, and then perform soft combination (soft combining) on the soft information, to increase a data decoding success rate.

### 8. PDSCH time domain resource allocation table

A PDSCH time domain resource allocation table is used to allocate a time domain resource for sending a PDSCH. The PDSCH time domain resource allocation table includes information about a start symbol (denoted as S) and a symbol length (which may also be referred to as a symbol quantity) (denoted as L) of a PDSCH time domain resource that are allowed by a network. Values of S and L are related to a mapping type (Mapping Type) of a PDSCH and a CP type, and the mapping type of the PDSCH includes a type A and a type B. CP types include a normal CP and an extended CP. For details about the PDSCH time domain resource allocation table, refer to Table 1.

**Table 1**

| PDSCH Mapping type | Normal CP | | | Extended CP | | |
|---|---|---|---|---|---|---|
| | s | L | S+L | s | L | S+L |
| Type A | {0, 1, 2, 3} (Note 1) | {3, . .. ,14} | {3, ..., 14} | {0, 1, 2, 3} (Note 1) | {3, ..., 12} | {3, ..., 12} |
| Type B | {0, ..., 12} | {2, 4, 7} | {2, ..., 14} | {0, ..., 10} | {2, 4, 6} | {2, ..., 12} |
| Note 1 | S=3 is applicable only to a case in which a DMRS corresponding to a PDSCH whose mapping type is A is located on a symbol #3. | | | | | |

Using the normal CP as an example, when the mapping type is the type A, S of the PDSCH may be a symbol # 0 to a symbol # 3 in one slot, and when the mapping type is the type B, S of the PDSCH may be a symbol # 0 to a symbol # 12 in one slot. When the mapping type of the PDSCH is the type A, L may be 3 to 14 symbols, and when the mapping type is the type B, L may be 2, 4, or 7 symbols.

It can be learned from Table 1 that, in a time division transmission solution of the multipoint transmission technology, when a plurality of TRPs all schedule PDSCHs based on Table 1, as shown in FIG. 6, a plurality of PDSCHs scheduled by the plurality of TRPs may be located in a same slot. In this case, if for each of the plurality of PDSCHs, a receive beam of a PDSCH is determined according to the method mentioned in the background, that is, the receive beam of the PDSCH is determined only based on a time interval between a time point at which the terminal device completes receiving of the PDCCH and a time point at which the terminal device receives the PDSCH, the following problem 1 and/or problem 2 may exist.

Problem 1: After receiving a previous PDSCH, the terminal device does not have sufficient time to perform beam switching, that is, the terminal device cannot complete switching from a receive beam of the previous PDSCH to a receive beam of a next PDSCH. As a result, when the next PDSCH is received, the receive beam of the previous PDSCH is still used instead of a beam paired with a beam for sending the next PDSCH, reducing receiving efficiency of the next PDSCH.

Problem 2: A difference between powers at which the terminal device receives two PDSCHs sent by different TRPs is beyond a proper range (that is, the difference is not in the optimal received signal strength range). After receiving the previous PDSCH, the terminal device does not have sufficient time to perform AGC adjustment, that is, the terminal device cannot complete AGC adjustment between the previous PDSCH and the next PDSCH. As a result, a received signal of the next PDSCH is distorted, reducing the receiving efficiency of the next PDSCH.

In the problem 2, in a case, that the power difference between the two PDSCHs sent by the different TRPs is beyond the proper range may be caused by path differences between the different TRPs and the terminal device. In another case, that the power difference between the two PDSCHs sent by the different TRPs is beyond the proper range may be caused by beam switching. That is, power differences between the two PDSCHs sent by the different TRPs are originally within the proper range, but because the terminal device performs beam switching, the power difference between the two PDSCHs is beyond the proper range, and further, the terminal device needs to perform AGC adjustment. For example, the TRP 1 sends a PDSCH 1 to the terminal device at the moment t1 by using a transmit beam 1, and the TRP 2 sends a PDSCH 2 to the terminal device at the moment t2 by using a transmit beam 2. Correspondingly, the terminal device receives the PDSCH 1 at the moment t1 by using a receive beam 1, and receives the PDSCH 2 at the moment t2 by using a receive beam 2. The terminal device needs to perform beam switching between the moment t1 and the moment t2. If the receive beam 2 that is switched to is aligned with the transmit beam 2, a difference between powers at which the terminal device receives the two PDSCHs is within the proper range. If the receive beam 2 that is switched to is not aligned with the transmit beam 2, a power at which the PDSCH 2 is received is greatly reduced, and consequently, the difference between the powers at which the terminal device receives the two PDSCHs is beyond the proper range. In this case, the terminal device needs to perform AGC adjustment.

To improve receiving efficiency of the terminal device, the embodiments of this application provide a data receiving and sending method, which is separately described in Embodiment 1 and Embodiment 2. It should be noted that unless otherwise specified, for nouns or terms mentioned in the embodiments of this application, reference may be made to each other. This is not limited. In addition, "two adjacent PDSCHs" in the embodiments of this application refer to "two PDSCHs between which no other PDSCH is transmitted". "The former PDSCH in two adjacent PDSCHs" refers to "a PDSCH that has an earlier time domain position in the two adjacent PDSCHs". "The latter PDSCH in two adjacent PDSCHs" refers to "a PDSCH that has a later time domain position in the two adjacent PDSCHs". That "a PDSCH is scheduled by using a PDCCH" in this application means that "the PDSCH is scheduled by using DCI in the PDCCH". In the embodiment of this application, "a PDCCH for scheduling a PDSCH" refers to "a PDCCH to which DCI for scheduling the PDSCH belongs". In the embodiments of this application, "still using" refers to "continuing to use" or "continuing to adopt". In the embodiments of this application, "a start time unit of a PDSCH" refers to "a start time unit in a time domain resource occupied by the PDSCH". In the embodiments of this application, "a symbol length of a PDSCH" refers to "a symbol length of a time domain resource occupied by the PDSCH". In the embodiments of this application, "sending a PDSCH" refers to "sending data on the PDSCH", "receiving a PDSCH" refers to "receiving data on the PDSCH", "sending a PDCCH" refers to "sending control information on the PDCCH", "receiving a PDCCH" refers to "receiving control information on the PDCCH", and "generating a PDSCH" refers to "generating data on the PDSCH".

### Embodiment 1

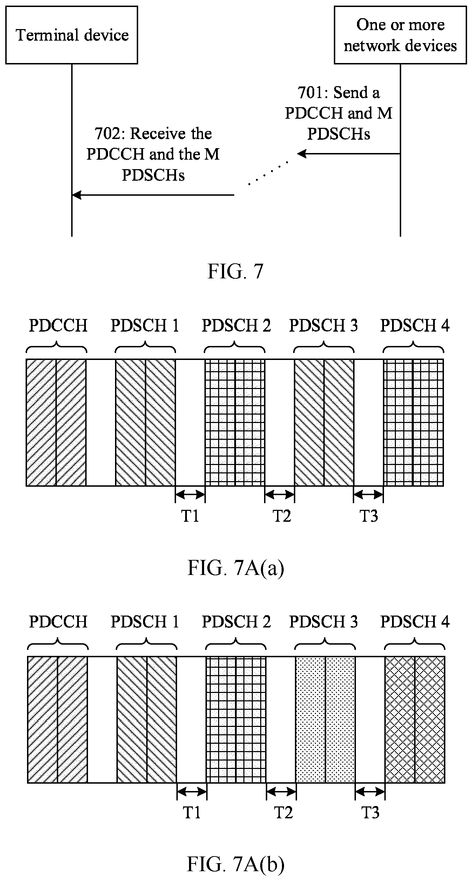

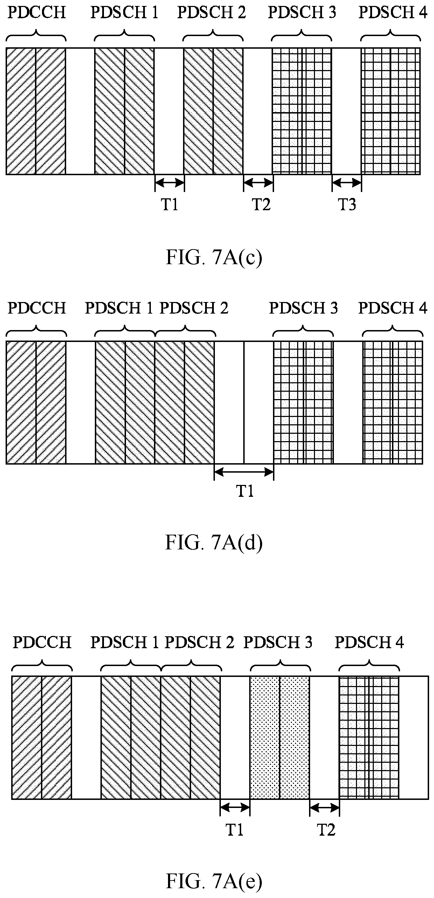

Embodiment 1 provides a data sending and receiving method. In this embodiment, M PDSCHs are scheduled by using one PDCCH, and M is an integer greater than 1. As shown in FIG. 7, the method includes the following steps.

701: One or more network devices send a PDCCH and M PDSCHs to a terminal device.

The M PDSCHs are scheduled by using DCI in the PDCCH, time domain resources occupied by any two of the M PDSCHs do not overlap, and the M PDSCHs are associated with at least two different pieces of beam indication information. Transmit beams of the M PDSCHs are related to a first time interval, and the first time interval is a time interval between adjacent PDSCHs in the M PDSCHs.

The M PDSCHs may be scheduled by using one or more pieces of DCI in the PDCCH. That time domain resources occupied by two PDSCHs do not overlap means that the time domain resources occupied by the two PDSCHs do not include any same time domain resource (for example, symbols occupied by the two PDSCHs do not have any same symbol). Beam indication information associated with one PDSCH is used to indicate a beam used by the PDSCH. When the terminal device receives two PDSCHs that are associated with different beam indication information (that is, two PDSCHs sent by using different beams), a relatively large received power difference may exist. Therefore, an AGC circuit performs automatic adjustment. Beam indication information associated with one PDSCH may be indicated by using a TCI carried in DCI for scheduling the PDSCH. For example, the beam indication information may be QCL information of a reference signal included in a TCI state indicated by the TCI in the DCI.

Optionally, the M PDSCHs are located in a same slot. Specifically, the terminal device may determine, based on time domain resource scheduling information (for example, the information is used to indicate a start symbol S and a symbol length L of the M PDSCHs) indicated in the DCI for scheduling the M PDSCHs, whether the M PDSCHs are located in the same slot.

Optionally, the M PDSCHs correspond to a same information bit. Specifically, the terminal device may determine, based on higher layer signaling (for example, RRC signaling or MAC control element (MAC control element, MAC CE for short) signaling), that the M PDSCHs correspond to the same information bit. For example, if a "repetition factor (RepetitionFactor)" parameter is configured in the higher layer signaling, the terminal device determines that the M PDSCHs correspond to the same information bit. Alternatively, the terminal device may determine, based on a field in the DCI, that the M PDSCHs correspond to the same information bits. For example, if a field in the DCI indicates M scrambling identifiers (IDs) or M redundancy versions (redundancy versions, RVs for short), the M scrambling identifiers or the M RVs may indirectly indicate that a currently transmitted PDSCH is a repeatedly transmitted PDSCH, and the terminal device determines that the M PDSCHs correspond to the same information bit.

The M PDSCHs may be sent by a same network device to the terminal device, or may be sent by a plurality of network devices to the terminal device.

If the M PDSCHs are sent by the plurality of network devices to the terminal device, the network device may be a base station, an antenna panel of the base station, a TRP, or the like. For details, refer to the foregoing descriptions. In this case, the PDCCH may be sent by one of the plurality of network devices. In addition, how the plurality of network devices send the M PDSCHs may be controlled by a centralized controller. The centralized controller may be a centralized control device other than the plurality of network devices, or may be a network device that has a centralized control function in the plurality of network devices.

If the M PDSCHs are sent by one network device to the terminal device, the network device may be a base station. The base station may send the M PDSCHs to the terminal device by using a plurality of antenna panels.

In step 701, one network device may send any one or more of the M PDSCHs to the terminal device. In this case, before the network device sends the one or more PDSCHs, the network device may further generate the one or more PDSCHs.

In this application, a value of M may be related to a mapping type of the PDSCH. For example, one slot includes 14 symbols. When the mapping type of the PDSCH is a type B, a symbol length of the PDSCH maybe 2, 4, or 7. When the symbol length of the PDSCH is 7, a maximum of two PDSCHs can be mapped to one slot. When the symbol length of the PDSCH is 4, a maximum of three PDSCHs can be mapped to one slot. When the symbol length of the PDSCH is 2, a maximum of seven PDSCHs can be mapped to one slot. When mapping types of the plurality of PDSCHs include a type A and the type B, a maximum quantity of PDSCHs that can be mapped to one slot does not exceed 7. Therefore, a maximum value of M is 7. During actual transmission, in consideration of a beam switching delay and/or an AGC adjustment delay between the PDSCHs, the maximum value of M may be further reduced, for example, 5. Further, considering that the PDCCH and the PDSCH are generally located in a same slot, the maximum value of M may be reduced to 4. That is, when a quantity of repeated transmissions of the PDSCH in a same slot in a time division manner is determined in a future protocol, the maximum value of the quantity M of transmissions of the PDSCH may be any one of 4, 5, or 7. In addition, based on different mapping types and scheduling manners of the PDSCH, a specific value of M may be any one of 2 to 4. It should be noted that the terminal device and the network device may determine the maximum value of M based on a protocol, that is, the maximum value of M is agreed in the protocol (for example, the maximum value of M is a predetermined value). The terminal device may determine the maximum value of M based on higher layer signaling sent by the network device. In this case, the maximum value of M may be semi-statically changed. The network device may determine the maximum value of M based on terminal capability reporting. In this case, different terminal devices have different capabilities of performing repeated transmission and subsequent soft information combination operations. For example, different data processing capabilities or even different buffer sizes may cause different capabilities of different terminal devices to support M.

702: The terminal device receives the PDCCH and the M PDSCHs.

During specific implementation of step 702, the terminal device may receive the PDCCH and the M PDSCHs from one or more network devices.

According to the method provided in this embodiment of this application, when a plurality of PDSCHs are scheduled by using one PDCCH, the terminal device may determine receive beams of the M PDSCHs based on the first time interval, and the network device may determine, based on the first time interval, the transmit beam of the sent PDSCH. It can be learned from the descriptions of the foregoing problem 1 and problem 2, because the first time interval affects receiving efficiency of the PDSCH, the first time interval may be used as a consideration for determining the transmit beam and/or the receive beam of the PDSCH, to optimize the transmit beam and/or the receive beam of the PDSCH. In this way, the receiving efficiency of the PDSCH is improved.

In the foregoing embodiment, there may be the following three scenarios for the beam indication information associated with the M PDSCHs and the first time interval.

First scenario: The first time interval is defined as a time interval between adjacent PDSCHs that are associated with different beam indication information. When any two adjacent PDSCHs in the M PDSCHs are associated with different beam indication information, there are M-1 first time intervals. Non-adjacent PDSCHs in the M PDSCHs may be associated with same or different beam indication information. For example, refer to FIG. 7A(a) and FIG. 7A(b). Any two adjacent PDSCHs in a PDSCH 1, a PDSCH 2, a PDSCH 3, and a PDSCH 4 are associated with different beam indication information. In this case, there are three first time intervals between the four PDSCHs, which are denoted as T1, T2, and T3. In FIG. 7A(a), the PDSCH 1 and the PDSCH 3 are associated with same beam indication information, and the PDSCH 2 and the PDSCH 4 are associated with same beam indication information. In FIG. 7A(b), any two of the PDSCH 1, the PDSCH 2, the PDSCH 3, and the PDSCH 4 are associated with different beam indication information. It should be noted that, in FIG. 7A(a) to FIG. 7A(e), PDSCHs with same hatching patterns are associated with same beam indication information.

Second scenario: The first time interval is defined as a time interval between adjacent PDSCHs when the M PDSCHs are associated with at least two different pieces of beam indication information. In this case, there are M-1 first time intervals between the M PDSCHs. For example, refer to FIG. 7A(c). A PDSCH 1 and a PDSCH 2 are associated with same beam indication information, and a PDSCH 3 and a PDSCH 4 are associated with same beam indication information. In this case, there are three first time intervals, that is, T1, T2, and T3 shown in FIG. 7A(c).

Third scenario: The first time interval is defined as a time interval between adjacent PDSCHs that are associated with different beam indication information. At least two of the M PDSCHs are associated with different beam indication information. When at least two adjacent PDSCHs in the M PDSCHs are associated with same beam indication information, a quantity (denoted as Q-1) of first time intervals is less than M-1. For example, refer to FIG. 7A(d). A PDSCH 1 and a PDSCH 2 are associated with same beam indication information, and a PDSCH 3 and a PDSCH 4 are associated with same beam indication information. In this case, there is one first time interval, that is, T1 shown in FIG. 7A(d). For example, refer to FIG. 7A(e). Only a PDSCH 1 and a PDSCH 2 are associated with same beam indication information. In this case, there are two first time intervals, that is, T1 and T2 shown in FIG. 7A(e).

It should be noted that, in the third scenario, there may be a time interval between adjacent PDSCHs that are associated with same beam indication information in the M PDSCHs (or it may be understood that the time interval is greater than 0). However, the time interval is not the first time interval defined in this application. For example, in FIG. 7A(d), the time interval between the PDSCH 3 and the PDSCH 4 does not conform to the definition of the first time interval. Therefore, in the third scenario, the quantity of first time intervals may be less than M-1, and a subsequent processing procedure in the third scenario is only specific to these first time intervals.

Particularly, in the third scenario, some adjacent PDSCHs are associated with same beam indication information, and there is no beam switching delay. Therefore, there may be no time interval between the adjacent PDSCHs that are associated with the same beam indication information (or it may be understood that the time interval is 0). This may be flexibly determined through scheduling. For example, in FIG. 7A(d) and FIG. 7A(e), there is no time interval between the PDSCH 1 and the PDSCH 2.

To make this embodiment of this application clearer, the following describes in detail the method in this embodiment of this application in the first scenario and the second scenario by using a first part, and describes in detail the method in this embodiment of this application in the third scenario by using a second part.

### First part:

It should be noted that, in the first scenario and the second scenario, provided that any two of the M PDSCHs are associated with different beam indication information, the quantity of first time intervals is M-1. Regardless of whether any two adjacent PDSCHs are associated with same beam indication information, the M-1 first time intervals in content described in the first part may be in the first scenario, or may be in the second scenario.

In the first scenario and the second scenario, there are M-1 first time intervals between the M PDSCHs. Optionally, the M-1 first time intervals are the same. A first time interval between two adjacent PDSCHs may be a time interval between start time units (for example, start symbols) or a time interval between end time units (for example, end symbols) of the two adjacent PDSCHs, or may be a time interval between an end time unit (for example, an end symbol) of the former PDSCH in the two adjacent PDSCHs and a start time unit (for example, a start symbol) of the latter PDSCH in the two adjacent PDSCHs. In this application, an example in which a first time interval between two adjacent PDSCHs is a time interval between an end symbol of the former PDSCH in the two adjacent PDSCHs and a start symbol of the latter PDSCH in the two adjacent PDSCHs is used for description below.

In the first scenario and the second scenario, the receive beams of the M PDSCHs are related to the first time interval. The receive beam of each of the M PDSCHs is related to one first time interval. Specifically, a receive beam of the 1^{st} PDSCH in the M PDSCHs is related to the 1^{st} first time interval, and a receive beam of the latter PDSCH in two adjacent PDSCHs in the M PDSCHs is related to a first time interval between the two adjacent PDSCHs. The transmit beam of each of the M PDSCHs is related to one first time interval. Specifically, a transmit beam of the 1^{st} PDSCH in the M PDSCHs is related to the 1^{st} first time interval, and a transmit beam of the latter PDSCH in two adjacent PDSCHs in the M PDSCHs is related to a first time interval between the two adjacent PDSCHs.

The 1^{st} PDSCH is a PDSCH that occupies an earliest time domain resource in the M PDSCHs. The 1^{st} first time interval is a first time interval between the 1^{st} PDSCH and a PDSCH (denoted as the 2^{nd} PDSCH) adjacent to the 1^{st} PDSCH.

Optionally, for the network device, the transmit beams of the M PDSCHs are further related to a second time interval. A transmit beam of one of the M PDSCHs is further related to one second time interval. Specifically, a transmit beam of one of the M PDSCHs is related to a second time interval between the PDSCH and the PDCCH. For example, a transmit beam of any one (denoted as a first PDSCH) of the M PDSCHs is related to a second time interval between the first PDSCH and the PDCCH.

For the terminal device, the receive beams of the M PDSCHs are further related to the second time interval. A receive beam of one of the M PDSCHs is further related to one second time interval. Specifically, a receive beam of one of the M PDSCHs is related to a second time interval between the PDSCH and the PDCCH. For example, a receive beam of the first PDSCH is related to the second time interval between the first PDSCH and the PDCCH.

The second time interval is a time interval between the PDCCH and the PDSCH. It can be learned from the concept of second time interval that there are M second time intervals in total. A second time interval between one PDSCH and the PDCCH may be a time interval between start time units (for example, start symbols) of the PDSCH and the PDCCH or a time interval between end time units (for example, end symbols) of the PDSCH and the PDCCH, or may be a time interval between a start time unit (for example, a start symbol) of the PDSCH and an end time unit (for example, an end symbol) of the PDCCH or a time interval between an end time unit (for example, an end symbol) of the PDSCH and a start time unit (for example, a start symbol) of the PDCCH. Optionally, in another possible scenario, the second time interval is determined based on a time unit in which the DCI in the PDCCH is located. It should be noted that one piece of DCI is not necessarily located in an earliest time unit in time units occupied by the PDCCH. For example, one PDCCH occupies time domain resources of two time units, and the DCI may be located in the latter time unit in the two time units. In other words, the DCI is detected by the terminal device in the latter time unit in the two time units. In this case, the second time interval is a time interval between the start time unit or the end time unit of the PDSCH and the time unit in which the DCI is located. For ease of description, in this application, an example in which a second time interval between one PDSCH and the PDCCH is a time interval between a start symbol of the PDSCH and the start symbol of the PDCCH is used for description. In this case, the DCI is located in an earliest symbol in symbols occupied by the PDCCH.

For the receive beams of the M PDSCHs, the terminal device may uniformly determine the receive beams of the M PDSCHs (this determining manner is denoted as a determining manner 1-1), or may separately determine the receive beam of each of the M PDSCHs (this determining manner is denoted as a determining manner 1-2). The following specifically describes the two determining manners.

Determining manner 1-1: The receive beams of the M PDSCHs are uniformly determined.

In the determining manner 1-1, when each of the M-1 first time intervals is less than a first threshold, the receive beams of the M PDSCHs still use a receive beam of the PDCCH. It should be noted that "still using the beam of the PDCCH" may alternatively be replaced with "using a default receive beam". The default receive beam may be the receive beam of the PDCCH, or may be another defined receive beam, for example, a beam of a PDCCH corresponding to a minimum control resource set (control resource set, CORESET) ID. This is not limited in this application. This alternative description is applicable to any part that has similar descriptions in Embodiment 1 and Embodiment 2, and details are not described again in other parts.

Further optionally, time domain resource scheduling of the M PDSCHs uses a same scheduling interval (scheduling offset) or symbol interval (symbol offset), that is, the M-1 first time intervals are the same. In this case, the first time interval is a value, that is, the scheduling interval or the symbol interval. When the first time interval is less than the first threshold, the receive beams of the M PDSCHs still use the receive beam of the PDCCH.

In the embodiments of this application, when a first time interval between two adjacent PDSCHs is less than the first threshold, there may be no time for the terminal device to perform beam switching, and/or to complete AGC adjustment for a received power change before receiving the latter PDSCH in the two adjacent PDSCHs (which is briefly referred to as that beam switching and/or AGC adjustment between the adjacent PDSCHs cannot be completed below). In this case, if the latter PDSCH is received by still using a receive beam of the former PDSCH in the two adjacent PDSCHs, the 2^{nd} PDSCH may not be received at all, because in some scenarios, two network devices may be located in different directions of the terminal device, and the receive beam used by the terminal device to receive the PDSCH is usually relatively narrow, and has relatively strong directivity. Therefore, the terminal device may receive the M PDSCHs by using the receive beam for receiving the PDCCH. Because the receive beam of the PDCCH is wider than the receive beam of the PDSCH and has relatively weak directivity, a possibility that the terminal device receives the M PDSCHs greatly increases, thereby improving receiving efficiency of the terminal device. In addition, the PDSCH is always received by using the receive beam of the PDCCH without beam switching. This also reduces a possibility of a sudden change in received powers of adjacent PDSCHs or reduces a scale of a change in a received power, thereby reducing a possibility of AGC adjustment or a time period of AGC adjustment, and ensuring receiving quality of the 2^{nd} PDSCH.

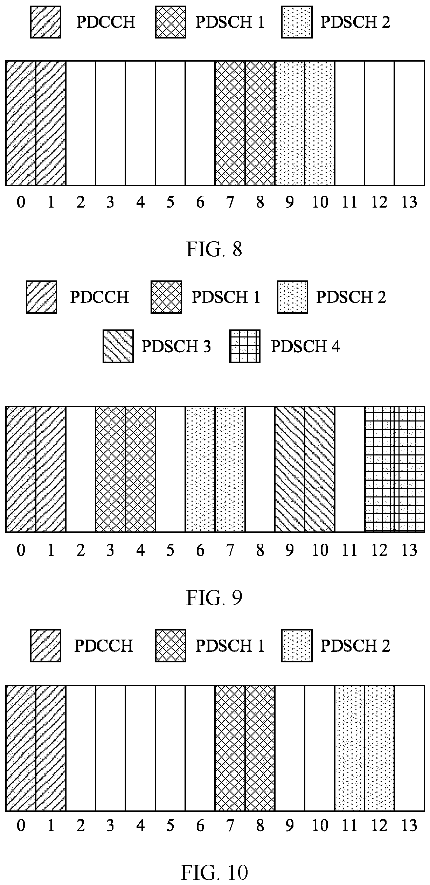

For example, it is assumed that the PDSCH 1 and the PDSCH 2 are scheduled by using the PDCCH. Refer to FIG. 8. The PDCCH for scheduling the PDSCH 1 and the PDSCH 2 occupies the first two symbols (that is, a symbol # 0 and a symbol # 1) of a slot. Symbols occupied by the PDSCH 1 are a symbol # 7 and a symbol # 8. Symbols occupied by the PDSCH 2 are a symbol # 9 and a symbol # 10. In this case, a first time interval between the PDSCH 1 and the PDSCH 2 is 0 symbols. It is assumed that the first threshold is 1 symbol. Because 0 is less than 1, the terminal device cannot complete beam switching and/or AGC adjustment between the adjacent PDSCHs. Therefore, both receive beams of the PDSCH 1 and the PDSCH 2 still use the receive beam of the PDCCH, thereby improving the receiving efficiency of the terminal device.

For example, it is assumed that the PDSCH 1 to the PDSCH 4 are scheduled by using the PDCCH. Refer to FIG. 9. The PDCCH for scheduling the PDSCH 1 to the PDSCH 4 occupies the first two symbols (that is, a symbol # 0 and a symbol # 1) of a slot. Symbols occupied by the PDSCH 1 are a symbol # 3 and a symbol # 4. Symbols occupied by the PDSCH 2 are a symbol # 6 and a symbol # 7. Symbols occupied by the PDSCH 3 are a symbol # 9 and a symbol # 10. Symbols occupied by the PDSCH 4 are a symbol # 12 and a symbol # 13. In this case, the first time intervals between the adjacent PDSCHs are the same, and each are 1 symbol. It is assumed that the first threshold is 2 symbols. Because 1 is less than 2, the terminal device cannot complete beam switching and/or AGC adjustment between the adjacent PDSCHs. Therefore, all receive beams of the PDSCH 1 to the PDSCH 4 still use the receive beam of the PDCCH, thereby improving the receiving efficiency of the terminal device.

In the determining manner 1-1, the terminal device may determine, in the following case 1, case 2, or case 3, that the receive beams of the M PDSCHs still use the receive beam of the PDCCH.

Case 1: The terminal device learns, by decoding the DCI in the PDCCH, that each of the M-1 first time intervals is less than the first threshold. Alternatively, the terminal device learns, by decoding the DCI in the PDCCH, that the M-1 first time intervals are the same, and that each of the M-1 first time intervals is less than the first threshold.

Case 2: The terminal device receives indication information (denoted as first indication information) sent by the network device, where the first indication information indicates, to the terminal device, a scheduling interval or a symbol interval used for time domain resource scheduling of the M PDSCHs. In this case, when determining that the scheduling interval or the symbol interval indicated by the first indication information is less than the first threshold, the terminal device determines that the receive beams of the M PDSCHs still use the receive beams of the PDCCH. It should be noted that if the first indication information received by the terminal device indicates a value of the scheduling interval or the symbol interval, the terminal device uses a same scheduling interval or symbol interval for time domain resource scheduling of the M PDSCHs by default.

Determining manner 1-2: The receive beam of each of the M PDSCHs is separately determined.

In the determining manner 1-2, the 1^{st} PDSCH and another PDSCH in the M PDSCHs may correspond to different receive beam determining methods, which are separately described below based on a scenario 1-1 and a scenario 1-2. A method for determining the receive beam of the 1^{st} PDSCH in the M PDSCHs is described in the scenario 1-1. A method for determining the receive beam of the PDSCH other than the 1^{st} PDSCH in the M PDSCHs is described in the scenario 1-2.

Scenario 1-1: The receive beam of the 1^{st} PDSCH in the M PDSCHs is determined.

In the scenario 1-1, the receive beam of the 1^{st} PDSCH is determined by at least one of a value relationship between the 1^{st} first time interval and a first threshold and a value relationship between the 1^{st} second time interval and a second threshold. The 1^{st} first time interval is a first time interval between the 1^{st} PDSCH and the 2^{nd} PDSCH, and the 1^{st} second time interval is a second time interval between the 1^{st} PDSCH and the PDCCH.

In the embodiments of this application, when a second time interval between one PDSCH and the PDCCH is greater than or equal to the second threshold, before receiving the PDSCH, the terminal device can obtain, through decoding, information in the DCI in the PDCCH, and can complete beam switching between the PDCCH and the PDSCH. Otherwise, before receiving the PDSCH, the terminal device cannot obtain, through decoding, information in DCI in the PDCCH, or cannot complete beam switching between the PDCCH and the PDSCH. In this case, the PDSCH cannot be received by using a beam indicated by beam indication information associated with the PDSCH in the DCI.

In the scenario 1-1, specifically, the terminal device may determine the receive beam of the 1^{st} PDSCH in the following manner 1-1-1, manner 1-1-2, or manner 1-1-3.

### Manner 1-1-1

If the 1^{st} first time interval is less than the first threshold, the receive beam of the 1^{st} PDSCH still uses the receive beam of the PDCCH. In this case, even if the 1^{st} second time interval is greater than or equal to the second threshold, that is, the terminal device can receive the 1^{st} PDSCH by using a beam indicated by beam indication information associated with the 1^{st} PDSCH in the DCI, the terminal device receives the 1^{st} PDSCH by still using the receive beam of the PDCCH. The reason is as follows: Because the 1^{st} first time interval is less than the first threshold, the terminal device cannot complete beam switching and/or AGC adjustment between the adjacent PDSCHs. If the terminal device receives the 1^{st} PDSCH by using the beam indicated by the beam indication information associated with the 1^{st} PDSCH in the DCI, it means that the terminal device also needs to receive the 2^{nd} PDSCH by using the receive beam of the 1^{st} PDSCH. Because the receive beam of the 1^{st} PDSCH may be a narrow beam, and it is difficult for the terminal device to successfully receive the 2^{nd} PDSCH, receiving quality of the 2^{nd} PDSCH is comprehensively considered, and the terminal device may receive the 1^{st} PDSCH by using a wide beam for receiving the PDCCH.

For example, refer to FIG. 8. It is assumed that the first threshold is 1 symbol. Because the first time interval between the PDSCH 1 and the PDSCH 2 is 0 symbols, and is less than the first threshold, the receive beam of the PDSCH 1 still uses the receive beam of the PDCCH.

For example, refer to FIG. 9. It is assumed that the first threshold is 2 symbols. Because the first time interval between the PDSCH 1 and the PDSCH 2 is 1 symbol, and is less than the first threshold, the receive beam of the PDSCH 1 still uses the receive beam of the PDCCH.

### Manner 1-1-2

If the 1^{st} second time interval is greater than or equal to the second threshold, the receive beam of the 1^{st} PDSCH is a beam indicated by beam indication information associated with the 1^{st} PDSCH in the DCI.

If the 1^{st} first time interval is greater than or equal to the first threshold, and the 1^{st} second time interval is greater than or equal to the second threshold, because the terminal device can complete beam switching and/or AGC adjustment between the adjacent PDSCHs, and may obtain, through decoding, information in the DCI in the PDCCH and can complete beam switching between the PDCCH and the 1^{st} PDSCH, the terminal device receives the 1^{st} PDSCH by using the beam indicated by the beam indication information associated with the 1^{st} PDSCH in the DCI.

If the 1^{st} first time interval is less than the first threshold, and the 1^{st} second time interval is greater than or equal to the second threshold, the terminal device may obtain, through decoding, information in the DCI in the PDCCH and can complete beam switching between the PDCCH and the 1^{st} PDSCH. Although the terminal device cannot complete beam switching and/or AGC adjustment between the adjacent PDSCHs, to ensure receiving quality of the PDSCH 1, the terminal device may receive the 1^{st} PDSCH by using the beam indicated by the beam indication information associated with the 1^{st} PDSCH in the DCI.

During specific implementation, if the 1^{st} first time interval is less than the first threshold, the terminal device may select, based on an actual requirement, the receive beam determined in the manner 1-1 or the receive beam determined in the manner 1-1-2, to receive the 1^{st} PDSCH.

For example, it is assumed that the PDSCH 1 and the PDSCH 2 are scheduled by using the PDCCH. Refer to FIG. 10. The PDCCH for scheduling the PDSCH 1 and the PDSCH 2 occupies the first two symbols (that is, a symbol # 0 and a symbol # 1) of a slot. Symbols occupied by the PDSCH 1 are a symbol # 7 and a symbol # 8. Symbols occupied by the PDSCH 2 are a symbol # 11 and a symbol # 12. In this case, a second time interval between the PDSCH 1 and the PDCCH is 7 symbols, and a first time interval between the PDSCH 1 and the PDSCH 2 is 2 symbols. It is assumed that the first threshold is 1 symbol, and the second threshold is 7 symbols. Because the first time interval between the PDSCH 1 and the PDSCH 2 is greater than the first threshold, and the second time interval between the PDSCH 1 and the PDCCH is equal to the second threshold, the terminal device receives the PDSCH 1 by using a beam indicated by the beam indication information associated with the PDSCH 1 in the DCI.

### Manner 1-1-3

If the 1^{st} second time interval is less than the second threshold, the receive beam of the 1^{st} PDSCH still uses the receive beam of the PDCCH. In this case, because the terminal device cannot obtain, through decoding, information in the DCI in the PDCCH, or cannot complete beam switching between the PDCCH and the 1^{st} PDSCH, the 1^{st} PDSCH cannot be received by using the beam indicated by the beam indication information associated with the 1^{st} PDSCH in the DCI. Therefore, the terminal device receives the 1^{st} PDSCH by using the receive beam of the PDCCH.

For example, refer to FIG. 9. It is assumed that the second threshold is 7 symbols, and a second time interval between the PDSCH 1 and the PDCCH is 3 symbols. The second time interval between the PDSCH 1 and the PDCCH is less than the second threshold. Therefore, the receive beam of the PDSCH 1 still uses the receive beam of the PDCCH.

Scenario 1-2: The receive beam of the PDSCH other than the 1^{st} PDSCH in the MPDSCHs is determined.

In the scenario 1-2, a receive beam of the latter PDSCH in two adjacent PDSCHs is determined by at least one of a value relationship between a first time interval between the two adjacent PDSCHs and the first threshold, and a value relationship between a second time interval between the latter PDSCH and the PDCCH and the second threshold.

Specifically, the receive beam of the PDSCH other than the 1^{st} PDSCH in the M PDSCHs may be determined in the following manner 1-2-1 or manner 1-2-2.

### Manner 1-2-1

There may be three cases for the manner 1-2-1, which are denoted as a first case, a second case, and a third case.

First case: A first time interval between two adjacent PDSCHs is less than the first threshold.

In the first case, a receive beam of the latter PDSCH in the two adjacent PDSCHs still uses a receive beam of the former PDSCH in the two adjacent PDSCHs, or a receive beam of the latter PDSCH in the two adjacent PDSCHs uses a beam indicated by beam indication information associated with the latter PDSCH in the DCI, and antenna panels used for receiving the latter PDSCH and the former PDSCH in the two adjacent PDSCHs are different.

In the first case, if the first time interval between the two adjacent PDSCHs is less than the first threshold, the terminal device cannot complete beam switching and/or AGC adjustment between the adjacent PDSCHs. Therefore, the receive beam of the latter PDSCH in the two adjacent PDSCHs still uses the receive beam of the former PDSCH in the two adjacent PDSCHs.

However, if the terminal device has a multi-antenna panel capability, the terminal device may use another antenna panel, start another antenna panel, or activate a dormant antenna panel, to receive the latter PDSCH. Starting the antenna panel means that the antenna panel is in a standby state, and only relatively short hardware preparation time is required to complete beamforming. Activating the antenna panel means that the antenna panel is in a dormant state before, and it takes relatively long time to first activate the antenna panel, and then complete beamforming preparations, so that data can be actually sent and received.

The terminal device may start the antenna panel (or activate the dormant antenna panel) when an antenna panel startup condition (or an antenna panel activation condition) is satisfied. For example, the antenna panel startup condition (or the antenna panel activation condition) may be that a second time interval between a PDCCH and the latter PDSCH in two adjacent PDSCHs is greater than or equal to a third threshold. The third threshold is a time period required for starting the antenna panel (or activating the dormant antenna panel).

For example, refer to FIG. 9. The first time interval between the PDSCH 2 and the PDSCH 3 is 1 symbol. It is assumed that the first threshold is 2 symbol. Because 1 is less than 2, the terminal device cannot complete beam switching and/or AGC adjustment between the adjacent PDSCHs. Therefore, the receive beam of the PDSCH 3 still uses the receive beam of the PDSCH 2. Certainly, when the terminal device has the multi-antenna panel capability, the terminal device may alternatively receive the PDSCH 2 and the PDSCH 3 by using different antenna panels. In this case, the receive beam of the PDSCH 3 uses a beam indicated by beam indication information associated with the PDSCH 3 in the DCI.

Second case: A first time interval between two adjacent PDSCHs is greater than or equal to the first threshold, and a second time interval between the latter PDSCH and the PDCCH is greater than or equal to the second threshold.

In the second case, a receive beam of the latter PDSCH in the two adjacent PDSCHs uses a beam indicated by beam indication information associated with the latter PDSCH in the DCI.

In the second case, because the terminal device can complete beam switching and/or AGC adjustment between the adjacent PDSCHs, the terminal device may also obtain, through decoding, information in the DCI in the PDCCH. Therefore, the receive beam of the latter PDSCH in the two adjacent PDSCHs may use the beam indicated by the beam indication information associated with the latter PDSCH in the DCI.

For example, refer to FIG. 10. A second time interval between the PDSCH 2 and the PDCCH is 11 symbols, and a first time interval between the PDSCH 1 and the PDSCH 2 is 2 symbols. It is assumed that the first threshold is 1 symbol, and the second threshold is 7 symbols. Because the first time interval between the PDSCH 1 and the PDSCH 2 is greater than the first threshold, and the second time interval between the PDSCH 2 and the PDCCH is greater than the second threshold, the terminal device receives the PDSCH 2 by using a beam indicated by beam indication information associated with the PDSCH 2 in the DCI.

Third case: A second time interval between the latter PDSCH in two adjacent PDSCHs and the PDCCH is less than the second threshold.

In the third case, the receive beam of the latter PDSCH still uses the receive beam of the PDCCH.

### Manner 1-2-2

In the manner 1-2-2, when the M-1 first time intervals are the same, if the first time interval is less than the first threshold, the receive beam of the PDSCH other than the 1^{st} PDSCH in the M PDSCHs still uses the receive beam of the 1^{st} PDSCH.

In the manner 1-2-2, because the terminal device cannot complete beam switching and/or AGC adjustment between adjacent PDSCHs, PDSCHs other than the 1^{st} PDSCH may all still use the receive beam of the 1^{st} PDSCH.

For example, refer to FIG. 9. The first time intervals between the adjacent PDSCHs each are 1 symbol. It is assumed that the first threshold is 2 symbols. Because 1 is less than 2, the terminal device cannot complete beam switching and/or AGC adjustment between the adjacent PDSCHs. Therefore, the receive beams of the PDSCH 2 to the PDSCH 4 all still use the receive beam of the PDSCH 1.

For the second threshold, optionally, the second threshold is determined based on a time period required for the terminal device to decode the DCI and a time period required for the terminal device to complete beam switching. Specifically, the second threshold may be a sum of the time period required for the terminal device to decode the DCI and the time period required for the terminal device to complete beam switching.

For the first threshold, optionally, in a case, the first threshold is a time period required for the terminal device to complete beam switching, a time period required for the terminal device to complete AGC adjustment, or a sum of a time period required for the terminal device to complete beam switching and a time period required for the terminal device to complete AGC adjustment. In this case, the first threshold may be one value, for example, 1 symbol.

In another case, the first threshold is determined based on a time period required for the terminal device to complete beam switching and a first time period. The first time period is a minimum waiting time period between a time point at which the terminal device completes beam switching and a time point at which the terminal device receives the PDSCH by using a beam that is switched to. That is, after completing the beam switching, the terminal device waits for at least the first time period before receiving the PDSCH, and the terminal device may perform AGC adjustment within the first time period. In this case, the first threshold may include two values (for example, [x1, x2] symbols), where the first value is the time period required for the terminal device to complete the beam switching, and the second value is the first time period. In this case, the value relationship between the first time interval and the first threshold is a value relationship between the first time interval and a sum of the two values forming the first threshold.

Specifically, when the first time interval is greater than or equal to the sum of the two values forming the first threshold, a switching moment at which the network device performs switching between transmit beams of two adjacent PDSCHs and the terminal device performs switching between receive beams of the two adjacent PDSCHs is a moment that is x2 symbols before the first symbol of the latter PDSCH in the two adjacent PDSCHs. In other words, the network device and the terminal device perform beam switching x2 symbols early. In this way, it can be ensured that AGC adjustment is completed before data transmission is performed on the latter PDSCH. In other words, when the first time interval is greater than or equal to the sum of the two values forming the first threshold, at a position of x2 symbols after switching of transmit beams or receive beams of two adjacent PDSCHs is completed, the network device sends the PDSCH by using a transmit beam that is switched to, and the terminal device receives the PDSCH by using a receive beam that is switched to. Within a time period of x2 symbols, the network device may send some pilot signals, for example, a tracking reference signal (tracking reference signal, TRS for short), by using the transmit beam that is switched to, and the terminal device receives the TRS by using the receive beam that is switched to, to complete AGC adjustment. The TRS herein is merely an example rather than a limitation. The network device may configure and send another reference signal for the terminal device to complete AGC adjustment.

A time period required to complete beam switching may be minimum duration or maximum duration required to complete beam switching, and a time period required to complete AGC adjustment may be minimum duration or maximum duration required to complete AGC adjustment. The first time period may also be replaced with an AGC adjustment time period.

The first time period may be determined based on a response time period of an AGC circuit or an actual communication scenario (for example, determined based on a delay required by a service), or may be determined with reference to a response time period of an AGC circuit and an actual communication scenario. Alternatively, the first time period may be preconfigured, specified in a protocol, or configured by the network device for the terminal device by using RRC signaling, MACCE signaling, or DCI. The first time period may also be expressed as terms of same technical essence, such as "a minimum scheduling time interval", "a beam switching delay", and "a data scheduling time domain offset (offset)", in a future communication protocol.

Optionally, the first time period corresponds to a subcarrier spacing (subcarrier spacing, SCS for short).

In this optional method, the terminal device may determine the first time period based on a current subcarrier spacing. The first time period corresponding to the subcarrier spacing may be several microseconds, or may be several symbols. The correspondence between the first time period and the subcarrier spacing may be preconfigured or specified in a protocol.

For example, Table 2 shows an example of a possible correspondence between a first time period and a subcarrier spacing. Values of any two of four parameters A1, B1, C1, and D1 may be the same or different. Values of any two of four parameters A2, B2, C2, and D2 may be the same or different. This is not specifically limited in this embodiment of this application

**Table 2**

| scs | First time period |
|---|---|
| 15 kHz (kilohertz) | A1 microseconds or A2 symbols |
| 30 kHz | B1 microseconds or B2 symbols |
| 60 kHz | C1 microseconds or C2 symbols |
| 120 kHz | D1 microseconds or D2 symbols |

It should be noted that, it is assumed that the response time period of the AGC circuit of the terminal device is x microseconds, where x microseconds is one fourth of a time length of a symbol when a subcarrier spacing is set to 15 KHz. If there is only one definite response time period of the AGC circuit in a communications system, in consideration of the operation of the communications system at 15 KHz, the first time period can only be set to 4*x microseconds (that is, a time length of a next symbol when the subcarrier spacing is set to 15 KHz). In this case, when the subcarrier spacing is set to 240 KHz, the first time period is equivalent to occupying 16 symbols, causing a waste of communication resources.

In this optional method, the first time period may change with the subcarrier spacing, and a shortest delay may be selected in different subcarrier spacing configurations. For example, at 15 kHz, 1 symbol is required. At 240 kHz, to meet a requirement for the AGC adjustment time period, only four symbols are required based on actual conversion of x microseconds, which is much shorter than the preceding 16 symbols. In this way, a low delay requirement of a URLLC service can be met.

Optionally, the first threshold may be reported to the network device based on the terminal capability (UE Capability). In this case, the method may further include the following steps.

(11) The network device sends a user capability query request message to the terminal device, where the user capability query request message is used to request capability information of the terminal device. Correspondingly, the terminal device receives the user capability query request message.

(12) The terminal device sends a user capability query response message, where the user capability query response message includes the capability information of the terminal device, and the capability information of the terminal device includes information about the first threshold. Correspondingly, the network device receives the user capability query response message from the terminal device, and determines the first threshold based on the user capability query response message.

It should be noted that in the foregoing embodiment, any one of the first threshold, the second threshold, the third threshold, the first time interval, the second time interval, and the first time period may be a period of time (for example, 5 ms), or may be one or more time units (for example, 2 symbols). This is not limited in this embodiment of this application. If any one of the first threshold, the second threshold, the third threshold, the first time interval, the second time interval, and the first time period is a period of time, during actual implementation, the network device may convert the period of time into a symbol for processing. In addition, in the foregoing embodiment, any one of the first threshold, the second threshold, and the third threshold may be preconfigured, predefined, or preset, may be determined through negotiation between the terminal device and the network device, or may be configured by the network device for the terminal device. This is not specifically limited in this embodiment of this application.

Based on the method for determining the receive beams of the M PDSCHs by the terminal device in the foregoing embodiment, to ensure the receiving efficiency of the terminal device, the network device should determine the transmit beams of the PDSCHs by using a corresponding method. The following describes an example of the method for determining the transmit beams of the PDSCHs from a perspective of the network device. The network device may send one or more of the M PDSCHs to the terminal device. The transmit beam of the PDSCH may be determined in the following determining manner 2-1 or determining manner 2-2.

### Determining manner 2-1

When each of the M-1 first time intervals is less than the first threshold, the transmit beams of the M PDSCHs still use a transmit beam of the PDCCH. Further, if the M-1 first time intervals are the same and each of the M-1 first time intervals is less than the first threshold, the transmit beams of the M PDSCHs still use the transmit beam of the PDCCH.

That is, if each of the M-1 first time intervals is less than the first threshold, or if the M-1 first time intervals are the same and each of the M-1 first time intervals is less than the first threshold, the network device sends the at least one PDSCH to the terminal device by using the transmit beam of the PDCCH.

The first threshold may be reported by the terminal device to the network device based on the terminal capability (UE Capability).

### Determining manner 2-2

In the determining manner 2-2, for the 1^{st} PDSCH in the M PDSCHs and the PDSCH other than the 1^{st} PDSCH in the M PDSCHs, beams used by the network device to send the PDSCHs are different. Details are separately provided below based on a scenario 2-1 and a scenario 2-2.

A method for determining the transmit beam of the 1^{st} PDSCH in the M PDSCHs is described in the scenario 2-1. A method for determining the transmit beam of the PDSCH other than the 1^{st} PDSCH in the M PDSCHs is described in the scenario 2-2.

Scenario 2-1: Method for determining the transmit beam of the 1^{st} PDSCH in the M PDSCHs

In the scenario 2-1, the transmit beam of the 1^{st} PDSCH is determined by at least one of the value relationship between the 1^{st} first time interval and the first threshold and the value relationship between the 1^{st} second time interval and the second threshold.

In the scenario 2-1, if the 1^{st} first time interval is less than the first threshold, the transmit beam of the 1^{st} PDSCH still uses the transmit beam of the PDCCH.

If the 1^{st} second time interval is greater than or equal to the second threshold, the transmit beam of the 1^{st} PDSCH is the beam indicated by the beam indication information associated with the 1^{st} PDSCH in the DCI.

If the 1^{st} second time interval is less than the second threshold, the transmit beam of the 1^{st} PDSCH still uses the transmit beam of the PDCCH.

Scenario 2-2: Method for determining the transmit beam of the PDSCH other than the 1^{st} PDSCH in the M PDSCHs

In the scenario 2-2, a transmit beam of the latter PDSCH in two adjacent PDSCHs is determined by at least one of a value relationship between a first time interval between the two adjacent PDSCHs and the first threshold, and a value relationship between a second time interval between the latter PDSCH and the PDCCH and the second threshold.

Specifically, the transmit beam of the PDSCH other than the 1^{st} PDSCH in the M PDSCHs may be determined in the following manner 2-1 or manner 2-2.

### Manner 2-1

There may be three cases for the manner 2-1, which are denoted as a first case, a second case, and a third case.

First case: A first time interval between two adjacent PDSCHs is less than the first threshold.

In the first case, a transmit beam of the latter PDSCH in the two adjacent PDSCHs still uses a transmit beam of the former PDSCH in the two adjacent PDSCHs, or a transmit beam of the latter PDSCH in the two adjacent PDSCHs uses a beam indicated by beam indication information associated with the latter PDSCH in the DCI, and antenna panels used for receiving the latter PDSCH and the former PDSCH in the two adjacent PDSCHs are different.

In the first case, when the network device determines that the terminal device has the multi-antenna panel capability, the transmit beam of the latter PDSCH in the two adjacent PDSCHs uses the beam indicated by the beam indication information associated with the latter PDSCH in the DCI. Whether the terminal device has the multi-antenna panel capability may be reported by the terminal device by using the terminal capability.

Second case: A first time interval between two adjacent PDSCHs is greater than or equal to the first threshold, and a second time interval between the latter PDSCH and the PDCCH is greater than or equal to the second threshold.

In the second case, a transmit beam of the latter PDSCH in the two adjacent PDSCHs uses a beam indicated by beam indication information associated with the latter PDSCH in the DCI.

Third case: A second time interval between the latter PDSCH in two adjacent PDSCHs and the PDCCH is less than the second threshold.

In the third case, a transmit beam of the latter PDSCH still uses the transmit beam of the PDCCH.

### Manner 2-2

There are M-1 first time intervals between the M PDSCHs, the M-1 first time intervals are the same, and when each of the M-1 first time intervals is less than the first threshold, the transmit beam of the PDSCH other than the 1^{st} PDSCH in the M PDSCHs still uses the transmit beam of the 1^{st} PDSCH.

A reason why the network device determines the transmit beam of the PDSCH by using the foregoing method is the same as a reason why the terminal device determines the receive beam of the PDSCH by using a same method. Details are not described herein again. The transmit beam of each of the at least one PDSCH sent by the network device may be determined by using a corresponding method.

### Second part:

In the third scenario, there are Q-1 first time intervals between the M PDSCHs, and Q is an integer less than M. One first time interval is a time interval between two adjacent PDSCH groups, and one PDSCH group refers to one or more adjacent PDSCHs that are associated with same beam indication information in the M PDSCHs. If there are Q-1 first time intervals between the M PDSCHs, the M PDSCHs may be grouped into Q PDSCH groups. For example, FIG. 7A(d) includes two PDSCH groups, where the 1^{st} PDSCH group includes the PDSCH 1 and the PDSCH 2, and the 2^{nd} PDSCH group includes the PDSCH 3 and the PDSCH 4.

It may be understood that if beam indication information associated with one PDSCH is different from beam indication information associated with a PDSCH adjacent to the PDSCH, the PDSCH is a PDSCH group, that is, one PDSCH group may include only one PDSCH. For example, FIG. 7A(e) includes three PDSCH groups, where the 1^{st} PDSCH group includes the PDSCH 1 and the PDSCH 2, the 2^{nd} PDSCH group includes the PDSCH 3, and the 3^{rd} PDSCH group includes the PDSCH 4.

Because PDSCHs in a same PDSCH group are associated with same beam indication information, beam switching and/or AGC adjustment do/does not need to be performed between the PDSCHs in the same PDSCH group.

Optionally, the Q-1 first time intervals are the same. A first time interval between two adjacent PDSCH groups may be a time interval between start time units (for example, start symbols) of the two adjacent PDSCH groups or a time interval between end time units (for example, end symbols) of the two adjacent PDSCH groups, or may be a time interval between an end time unit (for example, an end symbol) of the former PDSCH group in the two adjacent PDSCH groups and a start time unit (for example, a start symbol) of the latter PDSCH group in the two adjacent PDSCH groups. A start time unit of a PDSCH group is a start time unit of a PDSCH that occupies an earliest time domain resource in the PDSCH group. An end time unit of a PDSCH group is an end time unit of a PDSCH that occupies a latest time domain resource in the PDSCH group.

It should be noted that a method for determining a transmit beam and/or a receive beam of each PDSCH group in the second part is the same as the method for determining the transmit beam and/or the receive beam of each PDSCH in the first part, and the only difference lies in that in the second part, determining is performed by using a PDSCH group as a unit. All methods for determining the transmit beam and/or the receive beam of each PDSCH in the first part may be used to determine the transmit beam and/or the receive beam of each PDSCH group, and only the following replacement is required: "M PDSCHs" are replaced with "Q PDSCH groups", "two adjacent PDSCHs" are replaced with "two adjacent PDSCH groups", "adjacent PDSCHs" are replaced with "adjacent PDSCH groups", "the former PDSCH in two adjacent PDSCHs" is replaced with "the former PDSCH group in two adjacent PDSCH groups", "the latter PDSCH in two adjacent PDSCHs" is replaced with "the latter PDSCH group in two adjacent PDSCH groups", "each PDSCH" is replaced with "each PDSCH group", "the 1^{st} PDSCH" is replaced with "the 1^{st} PDSCH group", "the 2^{nd} PDSCH" is replaced with "the 2^{nd} PDSCH group", "M-1 first time intervals" are replaced with "Q-1 first time intervals", "one PDSCH" is replaced with "one PDSCH group", "a first PDSCH" is replaced with "a first PDSCH group", and the like.

The following briefly describes some of the methods for determining the receive beam of each PDSCH group in the second part. A similar method is used to determine the transmit beam of each PDSCH group, provided that the receive beam is replaced with the transmit beam.

Method 1: When each of the Q-1 first time intervals is less than a first threshold, the receive beams of the M PDSCHs (that is, Q PDSCH groups) still use the receive beam of the PDCCH.

It may be understood that, when a first time interval between two adjacent PDSCH groups is less than the first threshold, before receiving the latter PDSCH group in the two adjacent PDSCH groups, the terminal device cannot complete beam switching and/or AGC adjustment between the adjacent PDSCH groups. In this case, if the latter PDSCH group is received by still using a receive beam of the former PDSCH group in the two adjacent PDSCH groups, the 2^{nd} PDSCH group may not be received at all, because in some scenarios, two network devices may be located in different directions of the terminal device, and the receive beam used by the terminal device to receive the PDSCH is usually relatively narrow, and has relatively strong directivity. Therefore, the terminal device may receive the Q PDSCH groups by using the receive beam for receiving the PDCCH. Because the receive beam of the PDCCH is wider than the receive beam of the PDSCH and has relatively weak directivity, a possibility that the terminal device receives the Q PDSCH groups greatly increases, thereby improving receiving efficiency of the terminal device. In addition, the PDSCH is always received by using the receive beam of the PDCCH without beam switching. This also reduces a possibility of a sudden change in received powers of adjacent PDSCH groups or reduces a scale of a change in a received power, thereby reducing a possibility of AGC adjustment or a time period of AGC adjustment, and ensuring receiving quality of the 2^{nd} PDSCH group.

For example, refer to FIG. 7A(e). The 1^{st} PDSCH group (that is, the PDSCH 1 and the PDSCH 2), the 2^{nd} PDSCH group (that is, the PDSCH 3), and the 3^{rd} PDSCH group (that is, the PDSCH 4) are scheduled by using the PDCCH. Two first time intervals (that is, T1 and T2) each are 1 symbol. It is assumed that the first threshold is 2 symbols. Because 1 is less than 2, the terminal device cannot complete beam switching and/or AGC adjustment between the adjacent PDSCH groups. Therefore, all receive beams of the three PDSCH groups still use the receive beam of the PDCCH, thereby improving the receiving efficiency of the terminal device. It should be noted that FIG. 7A(a) to FIG. 7A(e) are drawn by using an example in which the PDCCH and the PDSCH are located in a same slot. During actual implementation, the PDCCH and the PDSCH may alternatively be located in different slots. This is not limited.

Method 2: The receive beams of the M PDSCHs (that is, the Q PDSCH groups) are further related to a second time interval, and the second time interval is a time interval between the PDCCH and a PDSCH group. Specifically, the second time interval may be a time interval between start time units of the PDCCH and the PDSCH group. For example, refer to FIG. 7A(e). The three PDSCH groups, namely, the 1^{st} PDSCH group (that is, the PDSCH 1 and the PDSCH 2), the 2^{nd} PDSCH group (that is, the PDSCH 3), and the 3^{rd} PDSCH group (that is, the PDSCH 4) are scheduled by using the PDCCH. In this case, there are three second time intervals. The 1^{st} second time interval is a time interval between the PDCCH and the 1^{st} PDSCH group, that is, 3 symbols. The 2^{nd} second time interval is a time interval between the PDCCH and the 2^{nd} PDSCH group, that is, 8 symbols. The 3^{rd} second time interval is a time interval between the PDCCH and the 3^{rd} PDSCH group, that is, 11 symbols.

In the method 2, a receive beam of the 1^{st} PDSCH group is determined by a value relationship between the 1^{st} first time interval and the first threshold, the 1^{st} PDSCH group is a PDSCH group that occupies an earliest time domain resource in the M PDSCHs, and the 1^{st} first time interval is a first time interval between the 1^{st} PDSCH group and a PDSCH group adjacent to the 1^{st} PDSCH group.

For example, when the 1^{st} first time interval is less than the first threshold, the receive beam of the 1^{st} PDSCH group still uses the receive beam of the PDCCH. In this case, even if the 1^{st} second time interval is greater than or equal to the second threshold, that is, the terminal device can receive the 1^{st} PDSCH group by using a beam indicated by beam indication information associated with the 1^{st} PDSCH group in the DCI, the terminal device receives the 1^{st} PDSCH group by still using the receive beam of the PDCCH. The reason is as follows: Because the 1^{st} first time interval is less than the first threshold, the terminal device cannot complete beam switching and/or AGC adjustment between the adjacent PDSCH groups. If the terminal device receives the 1^{st} PDSCH group by using the beam indicated by the beam indication information associated with the 1^{st} PDSCH group in the DCI, it means that the terminal device also needs to receive the 2^{nd} PDSCH group by using the receive beam of the 1^{st} PDSCH group. Because the receive beam of the 1^{st} PDSCH group may be a narrow beam, and it is difficult for the terminal device to successfully receive the 2^{nd} PDSCH group, receiving quality of the 2^{nd} PDSCH group is comprehensively considered, and the terminal device may receive the 1^{st} PDSCH group by using a wide beam for receiving the PDCCH.

For example, based on the example shown in FIG. 7A(e), it is assumed that the first threshold is 2 symbols. Because a first time interval between the 1^{st} PDSCH group and the 2^{nd} PDSCH group is 1 symbol, and is less than the first threshold, the receive beam of the 1^{st} PDSCH group still uses the receive beam of the PDCCH.

In the method 2, a receive beam of the latter PDSCH group in two adjacent PDSCH groups is determined by at least one of a value relationship between a first time interval between the two adjacent PDSCH groups and the first threshold, and a value relationship between a second time interval between the latter PDSCH group and the PDCCH and a second threshold.

In the method 2, when the first time interval between the two adjacent PDSCH groups is less than the first threshold, in a possible implementation, the receive beam of the latter PDSCH group in the two adjacent PDSCH groups still uses a receive beam of the former PDSCH group in the two adjacent PDSCH groups. For example, based on the example shown in FIG. 7A(e), it is assumed that the first threshold is 2 symbols. Because a first time interval between the 1^{st} PDSCH group and the 2^{nd} PDSCH group is 1 symbol, and is less than the first threshold, a receive beam of the 2^{nd} PDSCH group still uses the receive beam of the 1^{st} PDSCH group. Because a first time interval between the 2^{nd} PDSCH group and the 3^{rd} PDSCH group is 1 symbol, and is less than the first threshold, a receive beam of the 3^{rd} PDSCH group still uses the receive beam of the 2^{nd} PDSCH group. In another possible implementation, the receive beam of the latter PDSCH group in the two adjacent PDSCH groups uses a beam indicated by beam indication information associated with the latter PDSCH group in the DCI, and antenna panels used for receiving the latter PDSCH group and the former PDSCH group in the two adjacent PDSCH groups are different.

If the first time interval between the two adjacent PDSCH groups is less than the first threshold, the terminal device cannot complete beam switching and/or AGC adjustment between the adjacent PDSCH groups. Therefore, the receive beam of the latter PDSCH group in the two adjacent PDSCH groups still uses the receive beam of the former PDSCH group in the two adjacent PDSCH groups. However, if the terminal device has a multi-antenna panel capability, the terminal device may use another antenna panel, start another antenna panel, or activate a dormant antenna panel, to receive the latter PDSCH group.

In the method 2, when the first time interval between the two adjacent PDSCH groups is greater than or equal to the first threshold, and the second time interval between the latter PDSCH group and the PDCCH is greater than or equal to the second threshold, the receive beam of the latter PDSCH group in the two adjacent PDSCH groups uses the beam indicated by the beam indication information associated with the latter PDSCH group in the DCI. In this case, because the terminal device can complete beam switching and/or AGC adjustment between the adjacent PDSCH groups, the terminal device may also obtain, through decoding, information in the DCI in the PDCCH. Therefore, the receive beam of the latter PDSCH group in the two adjacent PDSCH groups may use the beam indicated by the beam indication information associated with the latter PDSCH group in the DCI.

For example, refer to FIG. 7A(d). If the first threshold is 1 symbol, and the second threshold is 7 symbols, because the first time interval (that is, 2 symbols) between the 1^{st} PDSCH group and the 2^{nd} PDSCH group is greater than the first threshold, and the second time interval (that is, 9 symbols) between the PDCCH and the 2^{nd} PDSCH group is greater than the second threshold, the 2^{nd} PDSCH group may use a beam indicated by beam indication information associated with the 2^{nd} PDSCH group in the DCI.

In the method 2, there are Q-1 first time intervals between the M PDSCHs, the Q-1 first time intervals are the same, and when each of the Q-1 first time intervals is less than the first threshold, a receive beam of a PDSCH other than the 1^{st} PDSCH group in the M PDSCHs still uses the receive beam of the 1^{st} PDSCH group. In this case, because the terminal device cannot complete beam switching and/or AGC adjustment between the adjacent PDSCH groups, PDSCH groups other than the 1^{st} PDSCH group may all still use the receive beam of the 1^{st} PDSCH group.

### Embodiment 2

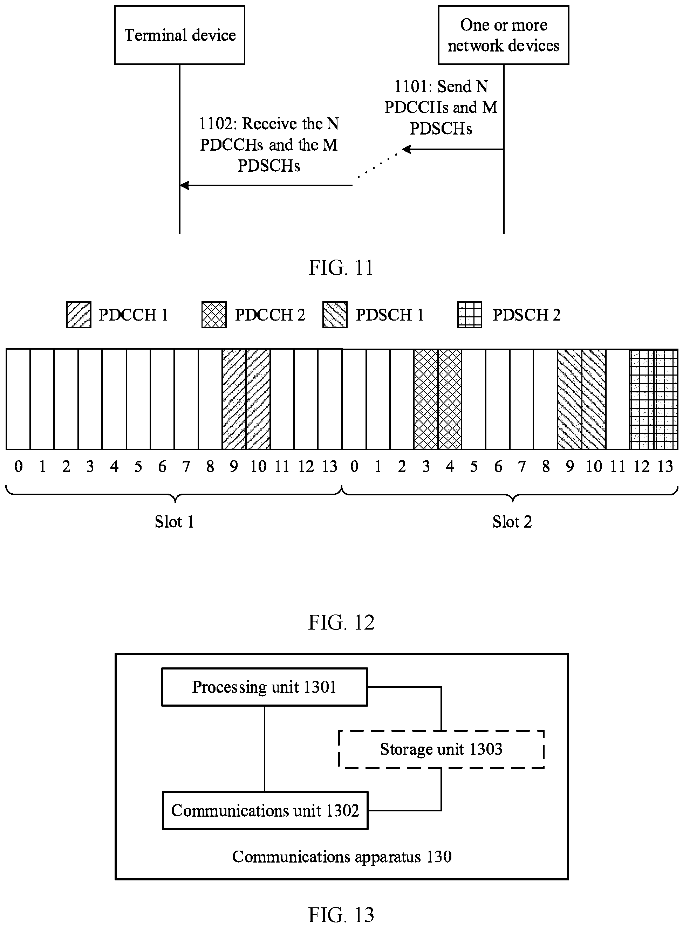

Embodiment 2 provides a data sending and receiving method. In this embodiment, M PDSCHs are scheduled by using a plurality of (denoted as N, where N is an integer greater than 1) PDCCHs, and M is an integer greater than 1. For explanation of content in this embodiment that is related to Embodiment 1, refer to related descriptions in Embodiment 1. As shown in FIG. 11, the method includes the following steps.

1101: One or more network devices send N PDCCHs and M PDSCHs to a terminal device.

The M PDSCHs are scheduled by using DCI in the N PDCCHs, time domain resources occupied by any two of the M PDSCHs do not overlap, and the M PDSCHs are associated with at least two different pieces of beam indication information.

Transmit beams of the M PDSCHs are related to a first time interval, and the first time interval is a time interval between adjacent PDSCHs in the M PDSCHs. The transmit beam of each of the M PDSCHs is related to one first time interval. Specifically, a transmit beam of the 1^{st} PDSCH in the M PDSCHs is related to the 1^{st} first time interval, and a transmit beam of the latter PDSCH in two adjacent PDSCHs in the M PDSCHs is related to a first time interval between the two adjacent PDSCHs. The 1^{st} PDSCH is a PDSCH that occupies an earliest time domain resource in the M PDSCHs. The 1^{st} first time interval is a first time interval between the 1^{st} PDSCH and a PDSCH (denoted as the 2^{nd} PDSCH) adjacent to the 1^{st} PDSCH.

Optionally, the M PDSCHs are located in a same slot.

Optionally, the M PDSCHs correspond to a same information bit.

It can be learned from the concept of first time interval that there are M-1 first time intervals between the M PDSCHs. Optionally, the M-1 first time intervals are the same.

In step 1101, one network device may send any one or more of the M PDSCHs to the terminal device. In this case, before the network device sends the one or more PDSCHs, the network device may further generate the one or more PDSCHs.

1102: The terminal device receives the N PDCCHs and the M PDSCHs.

Receive beams of the M PDSCHs are related to the first time interval. The receive beam of each of the M PDSCHs is related to one first time interval. Specifically, a receive beam of the 1^{st} PDSCH in the M PDSCHs is related to the 1^{st} first time interval, and a receive beam of the latter PDSCH in two adjacent PDSCHs in the M PDSCHs is related to a first time interval between the two adjacent PDSCHs.

During specific implementation of step 1102, the terminal device may receive the N PDCCHs and the M PDSCHs from the one or more network devices.

According to the method provided in this embodiment of this application, when a plurality of PDSCHs are scheduled by using a plurality of PDCCHs, the terminal device may determine the receive beams of the M PDSCHs based on the first time interval, and the network device may determine, based on the first time interval, the transmit beam of the sent PDSCH. It can be learned from the descriptions of the foregoing problem 1 and problem 2, because the first time interval affects receiving efficiency of the PDSCH, the first time interval may be used as a consideration for determining the transmit beam and/or the receive beam of the PDSCH, to optimize the transmit beam and/or the receive beam of the PDSCH. In this way, the receiving efficiency of the PDSCH is improved.

Optionally, for the network device, the transmit beams of the M PDSCHs are further related to a second time interval. A transmit beam of one of the M PDSCHs is further related to one second time interval. Specifically, a transmit beam of one of the M PDSCHs is related to a second time interval associated with the PDSCH. A second time interval associated with one PDSCH is a time interval between the PDSCH and a PDCCH to which DCI for scheduling the PDSCH belongs. For example, a transmit beam of any one (denoted as a first PDSCH) of the M PDSCHs is related to a second time interval associated with the first PDSCH.

For the terminal device, the receive beams of the M PDSCHs are further related to the second time interval. A receive beam of one of the M PDSCHs is further related to one second time interval. Specifically, a receive beam of one of the M PDSCHs is related to a second time interval associated with the PDSCH. A second time interval associated with one PDSCH is a time interval between the PDSCH and a PDCCH to which DCI for scheduling the PDSCH belongs. For example, a receive beam of the first PDSCH is related to the second time interval associated with the first PDSCH.

In Embodiment 2, the second time interval differs from the first time interval only in that the second time interval is a time interval between one PDSCH and a PDSCH to which DCI for scheduling the PDSCH belongs.

Optionally, the N PDCCHs are a PDCCH 1 and a PDCCH 2, the M PDSCHs are a PDSCH 1 and a PDSCH 2, the PDSCH 1 is scheduled by using DCI in the PDCCH 1, the PDSCH 2 is scheduled by using DCI in the PDCCH 2, a time domain resource of the PDCCH 1 is before that of the PDCCH 2, the time domain resource of the PDCCH 2 is before that of the PDSCH 1, and the time domain resource of the PDSCH 1 is before that of the PDSCH 2. For a specific example, refer to FIG. 12. In FIG. 12, symbols occupied by the PDCCH 1 are a symbol # 9 and a symbol # 10 in a slot 1. Symbols occupied by the PDCCH 2 are a symbol # 3 and a symbol # 4 in a slot 2. Symbols occupied by the PDSCH 1 are a symbol # 9 and a symbol # 10 in the slot 2. Symbols occupied by the PDSCH 2 are a symbol # 12 and a symbol # 13 in the slot 2.

### For the PDSCH 1:

If a first time interval between the PDSCH 1 and the PDSCH 2 is less than a first threshold, the terminal device cannot complete beam switching and/or AGC adjustment between adjacent PDSCHs. To ensure receiving efficiency of the PDSCH 2, a receive beam of the PDSCH 1 still uses a receive beam of the PDCCH 1 or the PDCCH 2. For example, refer to FIG. 12. The first time interval between the PDSCH 1 and the PDSCH 2 is 1 symbol. It is assumed that the first threshold is 2 symbols. In this case, the receive beam of the PDSCH 1 still uses the receive beam of the PDCCH 1 or the PDCCH 2.

If a second time interval between the PDSCH 1 and the PDCCH 1 is greater than or equal to a second threshold, and the first time interval between the PDSCH 1 and the PDSCH 2 is greater than or equal to the first threshold, it indicates that before receiving the PDSCH 1, the terminal device may decode information in DCI in the PDCCH 1, and complete beam switching between the PDSCH 1 and the PDCCH 1, or the terminal device may complete beam switching and/or AGC adjustment between adjacent PDSCHs. In this case, the receive beam of the PDSCH 1 uses a beam indicated by beam indication information associated with the PDSCH 1 in the DCI in the PDCCH 1. For example, refer to FIG. 12. The second time interval between the PDSCH 1 and the PDCCH 1 is 14 symbols, and the first time interval between the PDSCH 1 and the PDSCH 2 is 1 symbol. It is assumed that the second threshold is 7 symbols, and the first threshold is 1 symbol. In this case, the receive beam of the PDSCH 1 uses the beam indicated by the beam indication information associated with the PDSCH 1 in the DCI in the PDCCH 1.

If the second time interval between the PDSCH 1 and the PDCCH 1 is less than the second threshold, it indicates that before receiving the PDSCH 1, the terminal device cannot complete decoding of the information in the DCI in the PDCCH 1 or beam switching between the PDSCH 1 and the PDCCH 1. In this case, the receive beam of the PDSCH 1 still uses the receive beam of the PDCCH 1 or the PDCCH 2. For example, refer to FIG. 12. The second time interval between the PDSCH 1 and the PDCCH 1 is 14 symbols. It is assumed that the second threshold is 15 symbols. In this case, the receive beam of the PDSCH 1 still uses the receive beam of the PDCCH 1 or the PDCCH 2.

On a network device side, if the first time interval between the PDSCH 1 and the PDSCH 2 is less than the first threshold, a transmit beam of the PDSCH 1 still uses a transmit beam of the PDCCH 1 or the PDCCH 2; if the second time interval between the PDSCH 1 and the PDCCH 1 is greater than or equal to the second threshold, and the first time interval between the PDSCH 1 and the PDSCH 2 is greater than or equal to the first threshold, a transmit beam of the PDSCH 1 uses the beam indicated by the beam indication information associated with the PDSCH 1 in the DCI in the PDCCH 1; or if the second time interval between the PDSCH 1 and the PDCCH 1 is less than the second threshold, a transmit beam of the PDSCH 1 still uses a transmit beam of the PDCCH 1 or the PDCCH 2. A reason why the network device determines the transmit beam of the PDSCH 1 by using the foregoing method is the same as a reason why the terminal device determines the receive beam of the PDSCH 1 by using a same method. Details are not described herein again.

### For the PDSCH 2:

If a second time interval between the PDSCH 2 and the PDCCH 2 is greater than or equal to the second threshold, and the first time interval between the PDSCH 1 and the PDSCH 2 is greater than or equal to the first threshold, the terminal device may decode information in DCI in the PDCCH 2 and complete beam switching between the PDCCH 2 and the PDSCH 2, and may further complete beam switching and/or AGC adjustment between the PDSCH 1 and the PDSCH 2. Therefore, a receive beam of the PDSCH 2 uses a beam indicated by beam indication information associated with the PDSCH 2 in the DCI in the PDCCH 2. For example, refer to FIG. 12. The second time interval between the PDSCH 2 and the PDCCH 2 is 10 symbols, and the first time interval between the PDSCH 1 and the PDSCH 2 is 1 symbol. It is assumed that the second threshold is 7 symbols, and the first threshold is 1 symbol. In this case, the receive beam of the PDSCH 2 uses the beam indicated by the beam indication information associated with the PDSCH 2 in the DCI in the PDCCH 2.

If the first time interval between the PDSCH 1 and the PDSCH 2 is less than the first threshold, the terminal device cannot complete beam switching and/or AGC adjustment between the PDSCH 1 and the PDSCH 2. In this case, the receive beam of the PDSCH 2 still uses the receive beam of the PDSCH 1. For example, refer to FIG. 12. The first time interval between the PDSCH 1 and the PDSCH 2 is 1 symbol. It is assumed that the first threshold is 2 symbols. In this case, the receive beam of the PDSCH 2 still uses the receive beam of the PDSCH 1.

If the second time interval between the PDSCH 2 and the PDCCH 2 is less than the second threshold, it indicates that before receiving the PDSCH 2, the terminal device cannot complete decoding of the information in the DCI in the PDCCH 2 or beam switching between the PDSCH 2 and the PDCCH 2. In this case, the receive beam of the PDSCH 2 still uses the receive beam of the PDCCH 1 or the PDCCH 2. For example, refer to FIG. 12. The second time interval between the PDSCH 2 and the PDCCH 2 is 10 symbols. It is assumed that the second threshold is 11 symbols. In this case, the PDSCH 2 still uses the receive beam of the PDCCH 1 or the PDCCH 2.

On the network device side, if the second time interval between the PDSCH 2 and the PDCCH 2 is greater than or equal to the second threshold, and the first time interval between the PDSCH 1 and the PDSCH 2 is greater than or equal to the first threshold, a transmit beam of the PDSCH 2 uses the beam indicated by the beam indication information associated with the PDSCH 2 in the DCI in the PDCCH 2; if the first time interval between the PDSCH 1 and the PDSCH 2 is less than the first threshold, a transmit beam of the PDSCH 2 still uses the transmit beam of the PDSCH 1; or if the second time interval between the PDSCH 2 and the PDCCH 2 is less than the second threshold, a transmit beam of the PDSCH 2 still uses the transmit beam of the PDCCH 1 or the PDCCH 2. A reason why the network device determines the transmit beam of the PDSCH 2 by using the foregoing method is the same as a reason why the terminal device determines the receive beam of the PDSCH 2 by using a same method. Details are not described herein again.

For other descriptions about the first threshold, the second threshold, the first time interval, and the second time interval, refer to the foregoing descriptions. Details are not described herein again.

In the foregoing embodiments, in a first possible implementation, a length of the first time interval may be determined based on a frequency band. One frequency band corresponds to one first time interval. There may be a plurality of frequency bands. Correspondingly, there may also be a plurality of values of the first time interval. For example, in a frequency band 1, the first time interval is A (A is an integer greater than 0) symbols, and in a frequency band 2, the first time interval is B (B is an integer greater than 0) symbols.

Optionally, the frequency band 1 is a high frequency band, a frequency band in a frequency domain range (frequency range, FR) 2, a frequency band above 6 GHz (above 6 GHz), or the like. The frequency band 2 is a low frequency band, a frequency band in an FR 1, a frequency band below 6 GHz (sub 6 GHz), and the like. Alternatively, the frequency band 2 is a high frequency band, a frequency band in an FR 2, a frequency band above 6 GHz (above 6 GHz), or the like. The frequency band 1 is a low frequency band, a frequency band in an FR1, a frequency band below 6 GHz (sub 6 GHz), or the like. Certainly, the frequency band 1 and the frequency band 2 may alternatively be some more specific frequency bands. For example, the frequency band 1 may be a 3.5 GHz frequency band, and the frequency band 2 may be a 2.8 GHz frequency band. For another example, the frequency band 1 may be a frequency band of 2320 MHz to 2370 MHz, and the frequency band 2 may be a frequency band of 1755 MHz to 1785 MHz.

In a second possible implementation, a length of the first time interval may be determined based on a capability reported by the terminal device. In this case, different terminal devices may correspond to different first time intervals. Different terminal devices may report minimum values of the first time interval that are supported by the terminal devices (that is, minimum time lengths sufficient for the terminal devices to complete beam switching and/or AGC adjustment) to the network device, and the network device may determine, based on the minimum values, the first time intervals corresponding to the terminal devices. The first time interval determined by the network device may be greater than or equal to the minimum value. The minimum value may be a time length (for example, 3 µs), or may be several symbols (for example, 1 symbol). The minimum value may be related to one or more of information such as a beam switching capability of the terminal device, an AGC adjustment capability, a system parameter (numerology) (for example, an SCS and a CP length), and a bandwidth of the terminal device. For example, the minimum value may vary with the SCS and the CP length. For another example, the minimum value may vary with the bandwidth of the terminal device. Based on the foregoing case, when reporting a capability, the terminal device may report a group of minimum values. Different minimum values in the group of minimum values correspond to different values of one or more of the beam switching capability, the AGC adjustment capability, the numerology, and the bandwidth. The network device determines the minimum value based on one or more of a current beam switching capability, a current AGC adjustment capability, a current numerology, and a current bandwidth of the terminal device, and further determines the first time interval. A correspondence between the minimum value and one or more of the beam switching capability, the AGC adjustment capability, the numerology, and the bandwidth of the terminal device may be preconfigured or predefined, determined through negotiation between the network device and the terminal device, or specified in a protocol. When the minimum value reported by the terminal device is the time length, the network device may convert the minimum value into a quantity of symbols, and perform subsequent processing.

In a third possible implementation, the network device may determine, based on one or more of information such as a beam switching capability, an AGC adjustment capability, a numerology (for example, an SCS and a CP length), and a bandwidth of the terminal device, a first time interval corresponding to each terminal device. Different values of one or more of the beam switching capability, the AGC adjustment capability, the numerology, and the bandwidth may correspond to different first time intervals.

The foregoing mainly describes the solutions in the embodiments of this application from a perspective of interaction between network elements. It may be understood that, to implement the foregoing functions, the network elements such as the network device and the terminal device include at least one of corresponding hardware structures and software modules for performing the functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, division into functional units may be performed on the network device and the terminal device based on the method examples. For example, division into each functional unit may be based on each corresponding function, or two or more than two functions may be integrated into one processing unit. The integrated unit may be implemented in a form of hardware, or may be implemented in a form of a software functional unit. It should be noted that, in the embodiments of this application, division into the units is an example, and is merely a logical function division. During actual implementation, another division manner may be used.

FIG. 13 is a possible schematic diagram of a structure of the communications apparatus (denoted as a communications apparatus 130) in the foregoing embodiments when the integrated unit is used. The communications apparatus 130 includes a processing unit 1301 and a communications unit 1302, and may further include a storage unit 1303. The schematic diagram of the structure shown in FIG. 13 may be used to show structures of the network device and the terminal in the foregoing embodiments.

When the schematic diagram of the structure shown in FIG. 13 is used to show the structure of the terminal device in the foregoing embodiments, the processing unit 1301 is configured to control and manage an action of the terminal device. For example, the processing unit 1301 is configured to perform, by using the communications unit 1302, 702 in FIG. 7, 1102 in FIG. 11, and/or an action performed by the terminal device in another process described in the embodiments of this application. The processing unit 1301 may communicate with another network entity by using the communications unit 1302, for example, communicate with one or more network devices shown in FIG. 7. The storage unit 1303 is configured to store program code and data of the terminal device.

When the schematic diagram of the structure shown in FIG. 13 is used to show the structure of the terminal terminal in the foregoing embodiment, the communications apparatus 130 may be a terminal device, or may be a chip in the terminal device.

When the schematic diagram of the structure shown in FIG. 13 is used to show the structure of the network device in the foregoing embodiments, the processing unit 1301 is configured to control and manage an action of the network device. For example, the processing unit 1301 is configured to perform, by using the communications unit 1302, 701 in FIG. 7 (in this case, for one network device, the network device may send one or more PDSCHs, and a PDCCH may be sent by one of the one or more network devices), 1101 in FIG. 11 (in this case, for one network device, the network device may send one or more PDSCHs and/or one or more PDCCHs), and/or an action performed by the network device in another process described in the embodiments of this application. The processing unit 1301 may communicate with another network entity by using the communications unit 1302, for example, communicate with the terminal device shown in FIG. 7. The storage unit 1303 is configured to store program code and data of the network device.

When the schematic diagram of the structure shown in FIG. 13 is used to show the structure of the network device in the foregoing embodiment, the communications apparatus 130 may be a network device, or may be a chip in the network device.

When the communications apparatus 130 is the terminal device or the network device, the processing unit 1301 may be a processor or a controller, and the communications unit 1302 may be a communications interface, a transceiver, a transceiver, a transceiver circuit, a transceiver apparatus, or the like. The communications interface is a collective term, and may include one or more interfaces. The storage unit 1303 may be a memory. When the communications apparatus 130 is the chip in the terminal device or the network device, the processing unit 1301 may be a processor or a controller, and the communications unit 1302 may be an input/output interface, a pin, a circuit, or the like. The storage unit 1303 may be a storage unit (for example, a register or a cache) in the chip, or may be a storage unit (for example, a read-only memory or a random access memory) that is in the terminal device or the network device and that is located outside the chip.

The communications unit may also be referred to as a transceiver unit. An antenna and a control circuit that have receiving and sending functions in the communications apparatus 130 may be considered as the communications unit 1302 in the communications apparatus 130, and a processor that has a processing function in the communications apparatus 130 maybe considered as the processing unit 1301 in the communications apparatus 130. Optionally, a component configured to implement a receiving function in the communications unit 1302 may be considered as a receiving unit. The receiving unit is configured to perform the receiving step in the embodiments of this application. The receiving unit may be a receiver, a receiver, a receiver circuit, or the like. A component configured to implement a sending function in the communications unit 1302 may be considered as a sending unit. The sending unit is configured to perform the sending step in the embodiments of this application. The sending unit may be a transmitter, a transmitter, a sending circuit, or the like.

When the integrated unit in FIG. 13 is implemented in a form of a software functional module and sold or used as an independent product, the integrated unit may be stored in a computer-readable storage medium. Based on such an understanding, the technical solutions of the embodiments of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) or a processor (processor) to perform all or some of the steps of the methods in the embodiments of this application. The storage medium that stores the computer software product includes any medium that can store program code, for example, a USB flash drive, a removable hard disk, a read-only memory (read-only memory, ROM for short), a random access memory (random access memory, RAM for short), a magnetic disk, or an optical disc.

The unit in FIG. 13 may also be referred to as a module. For example, the processing unit may be referred to as a processing module.

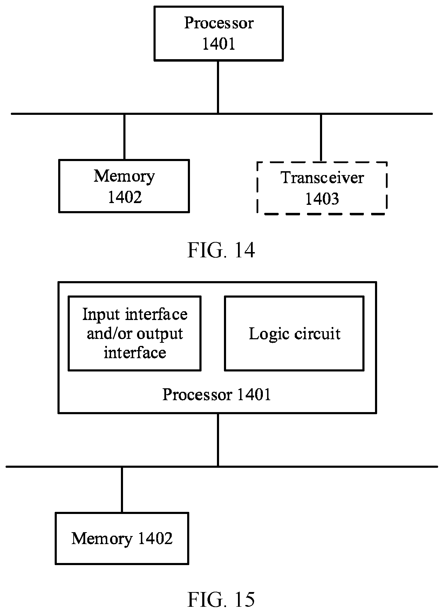

An embodiment of this application further provides a schematic diagram of a hardware structure of a communications apparatus (denoted as a communications apparatus 140). Refer to FIG. 14 or FIG. 15. The communications apparatus 140 includes a processor 1401. Optionally, the communications apparatus 140 further includes a memory 1402 connected to the processor 1401.

The processor 1401 may be a general-purpose central processing unit (central processing unit, CPU for short), a microprocessor, an application-specific integrated circuit (application-specific integrated circuit, ASIC for short), or one or more integrated circuits configured to control program execution in the solutions in this application. The processor 1401 may alternatively include a plurality of CPUs, and the processor 1401 may be a single-core (single-CPU) processor or a multi-core (multi-CPU) processor. The processor herein may refer to one or more devices, circuits, or processing cores configured to process data (for example, computer program instructions).

The memory 1402 may be a ROM or another type of static storage device that can store static information and instructions, or a RAM or another type of dynamic storage device that can store information and instructions, or may be an electrically erasable programmable read-only memory (electrically erasable programmable read-only memory, EEPROM for short), a compact disc read-only memory (compact disc read-only memory, CD-ROM for short) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this is not limited in the embodiments of this application. The memory 1402 may exist independently, or may be integrated into the processor 1401. The memory 1402 may include computer program code. The processor 1401 is configured to execute the computer program code stored in the memory 1402, to implement the method provided in the embodiments of this application.

In a first possible implementation, as shown in FIG. 14, the communications apparatus 140 further includes a transceiver 1403. The processor 1401, the memory 1402, and the transceiver 1403 are connected by using a bus. The transceiver 1403 is configured to communicate with another device or a communications network. Optionally, the transceiver 1403 may include a transmitter and a receiver. A component configured to implement a receiving function in the transceiver 1403 may be considered as a receiver. The receiver is configured to perform the receiving step in the embodiments of this application. A component configured to implement a sending function in the transceiver 1403 may be considered as a transmitter. The transmitter is configured to perform the sending step in the embodiments of this application.

Based on the first possible implementation, the schematic diagram of the structure shown in FIG. 14 may be used to show the structure of the network device or the terminal device in the foregoing embodiments.

When the schematic diagram of the structure shown in FIG. 14 is used to show the structure of the terminal device in the foregoing embodiments, the processor 1401 is configured to control and manage an action of the terminal device. For example, the processor 1401 is configured to support the terminal device in performing 702 in FIG. 7, 1102 in FIG. 11, and/or an action performed by the terminal device in another process described in the embodiments of this application. The processor 1401 may communicate with another network entity by using the transceiver 1403, for example, communicate with the one or more network devices shown in FIG. 7. The memory 1402 is configured to store program code and data of the terminal device.

When the schematic diagram of the structure shown in FIG. 14 is used to show the structure of the network device in the foregoing embodiments, the processor 1401 is configured to control and manage an action of the network device. For example, the processor 1401 is configured to support the network device in performing 701 in FIG. 7 (in this case, for one network device, the network device may send one or more PDSCHs, and a PDCCH may be sent by one of the one or more network devices), 1101 in FIG. 11 (in this case, for one network device, the network device may send one or more PDSCHs and/or one or more PDCCHs), and/or an action performed by the network device in another process described in the embodiments of this application. The processor 1401 may communicate with another network entity by using the transceiver 1403, for example, communicate with the terminal device shown in FIG. 7. The memory 1402 is configured to store program code and data of the network device.

In a second possible implementation, the processor 1401 includes a logic circuit and at least one of an input interface and an output interface. The output interface is configured to perform a sending action in a corresponding method, and the input interface is configured to perform a receiving action in the corresponding method.

Based on the second possible implementation, refer to FIG. 15. The schematic diagram of the structure shown in FIG. 15 may be used to show the structure of the network device or the terminal in the foregoing embodiments.

When the schematic diagram of the structure shown in FIG. 15 is used to show the structure of the terminal device in the foregoing embodiments, the processor 1401 is configured to control and manage an action of the terminal device. For example, the processor 1401 is configured to support the terminal device in performing 702 in FIG. 7, 1102 in FIG. 11, and/or an action performed by the terminal device in another process described in the embodiments of this application. The processor 1401 may communicate with another network entity by using at least one of the input interface and the output interface, for example, communicate with the one or more network devices shown in FIG. 7. The memory 1402 is configured to store program code and data of the terminal device.

When the schematic diagram of the structure shown in FIG. 15 is used to show the structure of the network device in the foregoing embodiments, the processor 1401 is configured to control and manage an action of the network device. For example, the processor 1401 is configured to support the network device in performing 701 in FIG. 7 (in this case, for one network device, the network device may send one or more PDSCHs, and a PDCCH may be sent by one of the one or more network devices), 1101 in FIG. 11 (in this case, for one network device, the network device may send one or more PDSCHs and/or one or more PDCCHs), and/or an action performed by the network device in another process described in the embodiments of this application. The processor 1401 may communicate with another network entity by using at least one of the input interface and the output interface, for example, communicate with the terminal device shown in FIG. 7. The memory 1402 is configured to store program code and data of the network device.

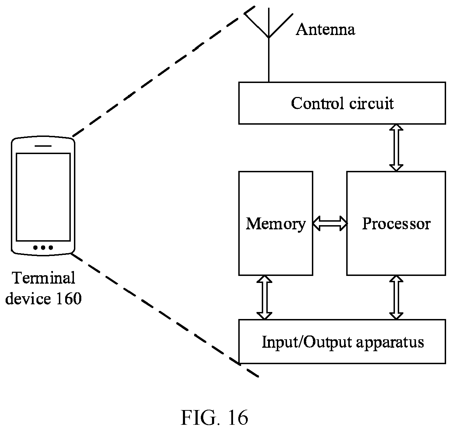

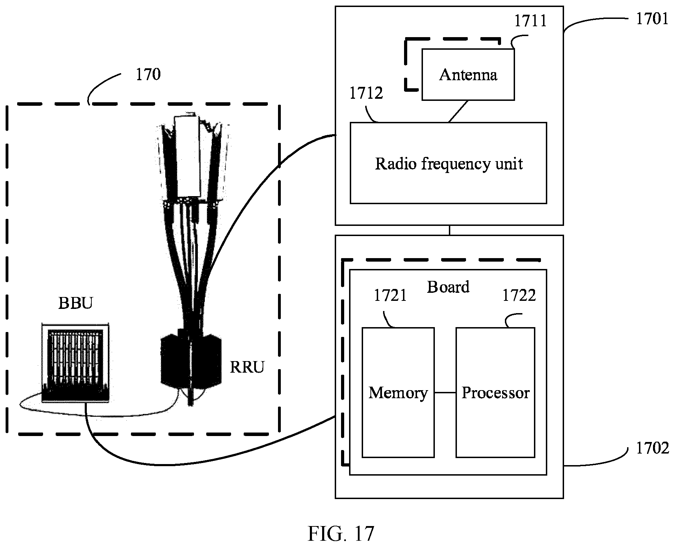

In addition, embodiments of this application further provide a schematic diagram of a hardware structure of a terminal device (denoted as a terminal device 160) and a schematic diagram of a hardware structure of a network device (denoted as a network device 170). For details, refer to FIG. 16 and FIG. 17 respectively.

FIG. 16 is the schematic diagram of the hardware structure of the terminal device 160. For ease of description, FIG. 16 shows only main components of the terminal device. As shown in FIG. 16, the terminal device 160 includes a processor, a memory, a control circuit, an antenna, and an input/output apparatus.

The processor is mainly configured to: process a communication protocol and communication data, control the entire terminal device, execute a software program, and process data of the software program. For example, the processor is configured to control the terminal device to perform 702 in FIG. 7, 1102 in FIG. 11, and/or an action performed by the terminal device in another process described in the embodiments of this application. The memory is mainly configured to store the software program and data. The control circuit (which may also be referred to as a radio frequency circuit) is mainly configured to: perform conversion between a baseband signal and a radio frequency signal, and process the radio frequency signal. A combination of the control circuit and the antenna may be referred to as a transceiver, mainly configured to send and receive a radio frequency signal in a form of an electromagnetic wave. The input/output apparatus such as a touchscreen, a display, or a keyboard is mainly configured to receive data entered by a user, and output data to the user.

After the terminal device is powered on, the processor may read the software program in the memory, explain and execute instructions of the software program, and process the data of the software program. When data needs to be sent by using the antenna, after performing baseband processing on the to-be-sent data, the processor outputs a baseband signal to the control circuit in the control circuit. After performing radio frequency processing on the baseband signal, the control circuit sends a radio frequency signal to the outside through the antenna in a form of an electromagnetic wave. When data is to be sent to the terminal device, the control circuit receives a radio frequency signal by using the antenna, converts the radio frequency signal into a baseband signal, and outputs the baseband signal to the processor. The processor converts the baseband signal into data, and processes the data.

A person skilled in the art may understand that for ease of description, FIG. 16 shows only one memory and one processor. An actual terminal device may have a plurality of processors and a plurality of memories. The memory may also be referred to as a storage medium, a storage device, or the like. This is not limited in the embodiments of this application.

In an optional implementation, the processor may include a baseband processor and a central processing unit. The baseband processor is mainly configured to process a communication protocol and communication data. The central processing unit is mainly configured to: control the entire terminal device, execute a software program, and process data of the software program. Functions of the baseband processor and the central processing unit are integrated into the processor in FIG. 16. A person skilled in the art may understand that the baseband processor and the central processing unit each may be an independent processor, and are interconnected by using technologies such as a bus. A person skilled in the art may understand that the terminal device may include a plurality of baseband processors to adapt to different network standards, the terminal device may include a plurality of central processing units to improve a processing capability of the terminal device, and parts of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program. The processor executes the software program to implement a baseband processing function.

FIG. 17 is the schematic diagram of the hardware structure of the network device 170. The network device 170 may include one or more radio frequency units, such as a remote radio unit (remote radio unit, RRU for short) 1701 and one or more baseband units (baseband unit, BBU for short) (which may also be referred to as digital units (digital units, DUs for short)) 1702.

The RRU 1701 may be referred to as a transceiver unit, a transceiver, a transceiver circuit, a transceiver, or the like, and may include at least one antenna 1711 and a radio frequency unit 1712. The RRU 1701 is mainly configured to: send and receive a radio frequency signal and perform conversion between a radio frequency signal and a baseband signal. The RRU 1701 and the BBU 1702 may be physically disposed together, or may be physically disposed separately, for example, a distributed base station.

The BBU 1702 is a control center of the network device, may be referred to as a processing unit, and is mainly configured to complete baseband processing functions such as channel coding, multiplexing, modulation, and spectrum spreading.

In an embodiment, the BBU 1702 may include one or more boards. A plurality of boards may jointly support a radio access network (such as an LTE network) of a single access standard, or may separately support radio access networks (such as an LTE network, a 5G network, or another network) of different access standards. The BBU 1702 further includes a memory 1721 and a processor 1722. The memory 1721 is configured to store necessary instructions and data. The processor 1722 is configured to control the network device to perform a necessary action. The memory 1721 and the processor 1722 may serve one or more boards. In other words, a memory and a processor may be separately disposed on each board. Alternatively, a plurality of boards may share a same memory and a same processor. In addition, a necessary circuit may be further disposed on each board.

It should be noted that, the network device 170 shown in FIG. 17 can perform 701 in FIG. 7 (in this case, for one network device, the network device may send one or more PDSCHs, and a PDCCH may be sent by one of the one or more network devices), 1101 in FIG. 11 (in this case, for one network device, the network device may send one or more PDSCHs and/or one or more PDCCHs), and/or an action performed by the network device in another process described in the embodiments of this application. Operations, functions, or operations and functions of modules in the network device 170 are separately set to implement corresponding procedures performed in the method embodiments. For details, refer to the descriptions in the foregoing method embodiments. To avoid repetition, detailed descriptions are properly omitted herein.

In an implementation process, the steps of the methods in the embodiments may be performed by using a hardware integrated logic circuit in the processor, or by using instructions in a form of software. The steps of the methods disclosed with reference to the embodiments of this application may be directly performed by a hardware processor, or may be performed by using a combination of hardware and software modules in the processor. For other descriptions about the processors in FIG. 16 and FIG. 17, refer to the descriptions related to the processors in FIG. 14 and FIG. 15. Details are not described again.

An embodiment of this application further provides a computer-readable storage medium, including instructions. When the instructions are run on a computer, the computer is enabled to perform any one of the foregoing methods.

An embodiment of this application further provides a computer program product including an instruction. When the computer program product runs on a computer, the computer is enabled to perform any one of the foregoing methods.

An embodiment of this application further provides a communications system, including the foregoing network device and the foregoing terminal device.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD for short)), or the like.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is clear that various modifications and combinations may be made to them without departing from the spirit and scope of this application. Correspondingly, the specification and the accompanying drawings are merely descriptions of examples of this application defined by the appended claims, and are considered as any of or all modifications, variations, combinations, or equivalents that cover the scope of this application. It is clear that a person skilled in the art can make various modifications and variations to this application without departing from the spirit and scope of this application. In this way, this application is intended to cover these modifications and variations of this application provided that they fall within the scope of the claims of this application and equivalent technologies thereof.

## Claims

1. A data receiving method, comprising:
receiving, by a terminal device, a physical downlink control channel PDCCH; and
receiving, by the terminal device, M physical downlink shared channels PDSCHs, wherein the M PDSCHs are scheduled by using downlink control information DCI in the PDCCH, time domain resources occupied by any two of the M PDSCHs do not overlap, the M PDSCHs are associated with at least two different pieces of beam indication information, receive beams of the M PDSCHs are related to a first time interval, the first time interval is a time interval between adjacent PDSCHs in the M PDSCHs, and M is an integer greater than 1.

2. The method according to claim 1, wherein any two adjacent PDSCHs in the M PDSCHs are associated with different beam indication information.

3. The method according to claim 1 or 2, wherein the M PDSCHs are located in a same slot.

4. The method according to any one of claims 1 to 3, wherein there are M-1 first time intervals between the M PDSCHs, and the M-1 first time intervals are the same.

5. The method according to claim 4, wherein when each of the M-1 first time intervals is less than a first threshold, the receive beams of the M PDSCHs still use a receive beam of the PDCCH.

6. The method according to any one of claims 1 to 5, wherein the receive beams of the M PDSCHs are further related to a second time interval, and the second time interval is a time interval between the PDCCH and the PDSCH.

7. The method according to claim 6, wherein
a receive beam of the 1^{st} PDSCH is determined by a value relationship between the 1^{st} first time interval and the first threshold, the 1^{st} PDSCH is a PDSCH that occupies an earliest time domain resource in the M PDSCHs, and the 1^{st} first time interval is a first time interval between the 1^{st} PDSCH and a PDSCH adjacent to the 1^{st} PDSCH; and/or
a receive beam of the latter PDSCH in two adjacent PDSCHs is determined by at least one of a value relationship between a first time interval between the two adjacent PDSCHs and the first threshold, and a value relationship between a second time interval between the latter PDSCH and the PDCCH and a second threshold.

8. The method according to claim 7, wherein
when the 1^{st} first time interval is less than the first threshold, the receive beam of the 1^{st} PDSCH still uses the receive beam of the PDCCH.

9. The method according to claim 7 or 8, wherein
when the first time interval between the two adjacent PDSCHs is less than the first threshold, the receive beam of the latter PDSCH in the two adjacent PDSCHs still uses a receive beam of the former PDSCH in the two adjacent PDSCHs, or the receive beam of the latter PDSCH in the two adjacent PDSCHs uses a beam indicated by beam indication information associated with the latter PDSCH in the DCI, and antenna panels used for receiving the latter PDSCH and the former PDSCH in the two adjacent PDSCHs are different; or
when the first time interval between the two adjacent PDSCHs is greater than or equal to the first threshold, and the second time interval between the latter PDSCH and the PDCCH is greater than or equal to the second threshold, the receive beam of the latter PDSCH in the two adjacent PDSCHs uses a beam indicated by beam indication information associated with the latter PDSCH in the DCI.

10. The method according to claim 7 or 8, wherein there are M-1 first time intervals between the M PDSCHs, the M-1 first time intervals are the same, and when each of the M-1 first time intervals is less than the first threshold, a receive beam of a PDSCH other than the 1^{st} PDSCH in the M PDSCHs still uses the receive beam of the 1^{st} PDSCH.

11. The method according to any one of claims 5 and 7 to 10, wherein the first threshold is a time period required for the terminal device to complete beam switching.

12. The method according to any one of claims 5 and 7 to 10, wherein the first threshold is determined by a first time period and a time period required for the terminal device to complete beam switching, and the first time period is a minimum waiting time period between a time point at which the terminal device completes beam switching and a time point at which the terminal device receives the PDSCH by using a beam that is switched to.

13. The method according to any one of claims 5 and 7 to 12, wherein the method further comprises:
receiving, by the terminal device, a user capability query request message, wherein the user capability query request message is used to request capability information of the terminal device; and
sending, by the terminal device, a user capability query response message, wherein the user capability query response message comprises the capability information of the terminal device, and the capability information of the terminal device comprises information about the first threshold.

14. The method according to any one of claims 1 to 13, wherein the M PDSCHs correspond to a same information bit.

15. A data sending method, comprising:
sending, by a network device, at least one physical downlink shared channel PDSCH to a terminal device, wherein the at least one PDSCH is any one or more of M PDSCHs, the M PDSCHs are scheduled by using downlink control information DCI in a physical downlink control channel PDCCH, time domain resources occupied by any two of the M PDSCHs do not overlap, the M PDSCHs are associated with at least two different pieces of beam indication information, transmit beams of the M PDSCHs are related to a first time interval, the first time interval is a time interval between adjacent PDSCHs in the M PDSCHs, and M is an integer greater than 1.

16. The method according to claim 15, wherein any two adjacent PDSCHs in the M PDSCHs are associated with different beam indication information.

17. The method according to claim 15 or 16, wherein the M PDSCHs are located in a same slot.

18. The method according to any one of claims 15 to 17, wherein there are M-1 first time intervals between the M PDSCHs, and the M-1 first time intervals are the same.

19. The method according to claim 18, wherein when each of the M-1 first time intervals is less than a first threshold, the transmit beams of the M PDSCHs still use a transmit beam of the PDCCH.

20. The method according to claim 19, wherein the first threshold is a time period required for the terminal device to complete beam switching.

21. The method according to any one of claims 15 to 20, wherein the transmit beams of the M PDSCHs are further related to a second time interval, and the second time interval is a time interval between the PDCCH and the PDSCH.

22. The method according to any one of claims 15 to 21, wherein the M PDSCHs correspond to a same information bit.

23. A data receiving apparatus, comprising a communications unit and a processing unit, wherein
the processing unit is configured to receive a physical downlink control channel PDCCH by using the communications unit; and
the processing unit is further configured to receive M physical downlink shared channels PDSCHs by using the communications unit, wherein the M PDSCHs are scheduled by using downlink control information DCI in the PDCCH, time domain resources occupied by any two of the M PDSCHs do not overlap, the M PDSCHs are associated with at least two different pieces of beam indication information, receive beams of the M PDSCHs are related to a first time interval, the first time interval is a time interval between adjacent PDSCHs in the M PDSCHs, and M is an integer greater than 1.

24. The apparatus according to claim 23, wherein any two adjacent PDSCHs in the M PDSCHs are associated with different beam indication information.

25. The apparatus according to claim 23 or 24, wherein the M PDSCHs are located in a same slot.

26. The apparatus according to any one of claims 23 to 25, wherein there are M-1 first time intervals between the M PDSCHs, and the M-1 first time intervals are the same.

27. The apparatus according to claim 26, wherein when each of the M-1 first time intervals is less than a first threshold, the receive beams of the M PDSCHs still use a receive beam of the PDCCH.

28. The apparatus according to any one of claims 23 to 27, wherein the receive beams of the M PDSCHs are further related to a second time interval, and the second time interval is a time interval between the PDCCH and the PDSCH.

29. The apparatus according to claim 28, wherein
a receive beam of the 1^{st} PDSCH is determined by a value relationship between the 1^{st} first time interval and the first threshold, the 1^{st} PDSCH is a PDSCH that occupies an earliest time domain resource in the M PDSCHs, and the 1^{st} first time interval is a first time interval between the 1^{st} PDSCH and a PDSCH adjacent to the 1^{st} PDSCH; and/or
a receive beam of the latter PDSCH in two adjacent PDSCHs is determined by at least one of a value relationship between a first time interval between the two adjacent PDSCHs and the first threshold, and a value relationship between a second time interval between the latter PDSCH and the PDCCH and a second threshold.

30. The apparatus according to claim 29, wherein
when the 1^{st} first time interval is less than the first threshold, the receive beam of the 1^{st} PDSCH still uses the receive beam of the PDCCH.

31. The apparatus according to claim 29 or 30, wherein
when the first time interval between the two adjacent PDSCHs is less than the first threshold, the receive beam of the latter PDSCH in the two adjacent PDSCHs still uses a receive beam of the former PDSCH in the two adjacent PDSCHs, or the receive beam of the latter PDSCH in the two adjacent PDSCHs uses a beam indicated by beam indication information associated with the latter PDSCH in the DCI, and antenna panels used for receiving the latter PDSCH and the former PDSCH in the two adjacent PDSCHs are different; or
when the first time interval between the two adjacent PDSCHs is greater than or equal to the first threshold, and the second time interval between the latter PDSCH and the PDCCH is greater than or equal to the second threshold, the receive beam of the latter PDSCH in the two adjacent PDSCHs uses a beam indicated by beam indication information associated with the latter PDSCH in the DCI.

32. The apparatus according to claim 29 or 30, wherein there are M-1 first time intervals between the M PDSCHs, the M-1 first time intervals are the same, and when each of the M-1 first time intervals is less than the first threshold, a receive beam of a PDSCH other than the 1^{st} PDSCH in the M PDSCHs still uses the receive beam of the 1^{st} PDSCH.

33. The apparatus according to any one of claims 27 and 29 to 32, wherein the first threshold is a time period required for the data receiving apparatus to complete beam switching.

34. The apparatus according to any one of claims 27 and 29 to 32, wherein the first threshold is determined by a first time period and a time period required for the data receiving apparatus to complete beam switching, and the first time period is a minimum waiting time period between a time point at which the data receiving apparatus completes beam switching and a time point at which the data receiving apparatus receives the PDSCH by using a beam that is switched to.

35. The apparatus according to any one of claims 27 and 29 to 34, wherein
the processing unit is further configured to receive a user capability query request message by using the communications unit, wherein the user capability query request message is used to request capability information of the data receiving apparatus; and
the processing unit is further configured to send a user capability query response message by using the communications unit, wherein the user capability query response message comprises the capability information of the data receiving apparatus, and the capability information of the data receiving apparatus comprises information about the first threshold.

36. The apparatus according to any one of claims 23 to 35, wherein the M PDSCHs correspond to a same information bit.

37. The apparatus according to any one of claims 23 to 36, wherein the processing unit is a processor, and the communications unit is a transceiver.

38. A data sending apparatus, comprising a communications unit and a processing unit, wherein
the processing unit is configured to send at least one physical downlink shared channel PDSCH to a terminal device by using the communications unit, wherein the at least one PDSCH is any one or more of M PDSCHs, the M PDSCHs are scheduled by using downlink control information DCI in a physical downlink control channel PDCCH, time domain resources occupied by any two of the M PDSCHs do not overlap, the M PDSCHs are associated with at least two different pieces of beam indication information, transmit beams of the M PDSCHs are related to a first time interval, the first time interval is a time interval between adjacent PDSCHs in the M PDSCHs, and M is an integer greater than 1.

39. The apparatus according to claim 38, wherein any two adjacent PDSCHs in the M PDSCHs are associated with different beam indication information.

40. The apparatus according to claim 38 or 39, wherein the M PDSCHs are located in a same slot.

41. The apparatus according to any one of claims 38 to 40, wherein there are M-1 first time intervals between the M PDSCHs, and the M-1 first time intervals are the same.

42. The apparatus according to claim 41, wherein when each of the M-1 first time intervals is less than a first threshold, the transmit beams of the M PDSCHs still use a transmit beam of the PDCCH.

43. The apparatus according to claim 42, wherein the first threshold is a time period required for the terminal device to complete beam switching.

44. The apparatus according to any one of claims 38 to 43, wherein the transmit beams of the M PDSCHs are further related to a second time interval, and the second time interval is a time interval between the PDCCH and the PDSCH.

45. The apparatus according to any one of claims 38 to 44, wherein the M PDSCHs correspond to a same information bit.

46. The apparatus according to any one of claims 38 to 45, wherein the processing unit is a processor, and the communications unit is a transceiver.

47. A processing apparatus, comprising a processor, wherein
the processor is connected to a memory, the memory is configured to store computer-executable instructions, and the processor executes the computer-executable instructions stored in the memory, to enable the apparatus to implement the method according to any one of claims 1 to 22.

48. A processing apparatus, comprising a processor and a communications interface, wherein
the communications interface is configured to input and/or output a signal; and
the processor is configured to execute a computer program, to enable the apparatus to implement the method according to any one of claims 1 to 22.

49. A processing apparatus, comprising a processor and a memory, wherein
the memory is configured to store a computer program; and
the processor is configured to execute the computer program stored in the memory, to enable the apparatus to implement the method according to any one of claims 1 to 22.

50. A computer-readable storage medium, comprising a computer program, wherein when the computer program runs on a computer, the computer is enabled to implement the method according to any one of claims 1 to 22.

51. A computer program product, comprising a computer program, wherein when the computer program runs on a computer, the computer is enabled to implement the method according to any one of claims 1 to 22.
